# EUROPEAN PATENT SPECIFICATION

(11) **EP 4 395 086 B1**
(45) Date of publication and mention of the grant of the patent: **19.11.2025**
(21) Application number: 22860317.1
(22) Date of filing: 16.08.2022
(51) Int. Cl.: H01R 24/20, B60L 53/16, B60R 16/02, H01B 1/02, H01R 4/02, H01R 4/34, H01R 11/01, H01R 11/11, H01R 13/02, H01R 13/03, H01R 13/11, H01R 31/06

(54) **TRANSFER MECHANISM FOR POWER TRANSMISSION, CHARGING SOCKET, AND MOTOR VEHICLE**
ÜBERTRAGUNGSMECHANISMUS ZUR STROMÜBERTRAGUNG, LADEBUCHSE UND KRAFTFAHRZEUG
MÉCANISME DE TRANSFERT POUR TRANSMISSION D'ÉNERGIE, DOUILLE DE CHARGE ET VÉHICULE À MOTEUR

(30) Priority: 26.08.2021 CN 202110991360
(43) Date of publication of application: 03.07.2024
(73) Proprietor: Changchun Jetty Automotive Technology Co., Ltd., Changchun, Jilin 130000 (CN)
(72) Inventor: WANG, Chao, Changchun, Jilin 130000 (CN)
(74) Representative: Habermann, Hruschka & Schnabel
(86) International application number: PCT/CN2022/112755
(87) International publication number: WO 2023/024971

(56) References cited:
- CN-A- 107 819 223
- CN-A- 110 224 240
- CN-A- 112 736 543
- CN-A- 113 708 172
- CN-U- 201 741 972
- CN-U- 202 513 302
- CN-U- 202 513 302
- CN-U- 204 720 687
- CN-U- 206 893 815
- CN-U- 209 329 221
- CN-U- 216 354 822
- JP-A- 2019 087 492
- US-A- 2 806 215

## Description

The present invention claims priority to Chinese Patent Application No. 202110991360.2, entitled "TRANSFER MECHANISM FOR POWER TRANSMISSION, CHARGING SOCKET AND MOTOR VEHICLE" as filed on August 26, 2021.

### TECHNICAL FIELD

The present invention relates to the technical field of electrical connections, in particular to a transfer mechanism for power transmission, a charging socket and a motor vehicle.

### BACKGROUND

At present, in the field of power transmission, there are occasions where a high current needs to be conducted, and cables and connecting terminals with a large cross-sectional area need to be used, in order to increase a size of an electrical device mechanism. For example, a charging system on an electric vehicle, which is increasingly widely used at present, increases a charging current, in order to reduce charging time, so that an effective conductive cross-sectional area of a charging cable and a charging terminal reaches 95 mm2 to 160 mm2, and a charging socket or a charging gun also becomes bulky and heavy, and inconvenient to use.

In view of a limitation to a volume of some electrical device mechanism, a terminal used for plug-in connection in the electrical device mechanism is not in the same axis as a cable used for power transmission, and cannot be directly connected, or an angular deviation exists between a direction in which the cable is lead out and an axial direction of the terminal, a respective transfer mechanism is required for connection.

In addition, since terminals that conduct high currents are made of copper materials as a base material, copper has good conductivity, low resistivity, good ductility, and machinability, terminals generally made of copper materials are machined by turning, forging, or stamping. When the connection position of the cable is far from the position of the terminal in the electrical device mechanism, the terminals are all machined from copper materials, where a large amount of copper materials are consumed and are seriously wasted, and the cost of the terminals cannot be reduced.

Therefore, in the field of power transmission, there is an urgent need for a transfer mechanism for power transmission between a connecting terminal and a cable, thus a non-axial or angled connection can be realized between the terminal and the cable, and copper material used by the terminal can be saved to reduce the cost of the terminal.

Transfer mechanism for power transmission and charging socket are known in the prior art, e.g. from CN202513302U and US2806215A.

### SUMMARY

The present invention provides a transfer mechanism for power transmission, a charging socket and a motor vehicle, which can realize a non-axial or angled connection between a terminal and a cable, and can save the copper material used by the terminal to reduce the cost of the terminal. The present invention can solve the problems that the electrical device mechanism is bulky; the non-coaxial or angled connection cannot be realized between the terminal and the cable, and the copper material of the terminal is highly consumed, and the cost of the terminal cannot be reduced.

The technical solution provided by the present invention is a transfer mechanism for power transmission, comprising a power transmission portion, a transfer portion and a cable, in which the power transmission portion comprises a plug-in end and a connection end which are connected in sequence, and the cable comprises an internal conductor and an insulation layer wrapping the conductor, the transfer portion comprises a first end, a bent portion and a second end which are connected in sequence, the first end is electrically connected to the connection end, the second end is electrically connected to the conductor on one end of the cable, and the bent portion comprises at least one bent zone. Furthermore, the bent zone is twisted, and an included angle between a plane or a longitudinal central symmetry plane of the first end and a plane or a longitudinal central symmetry plane of the second end is 0 to 90°, so that the outgoing angle of the cable is at an angle to an axial direction and a radial direction of the power transmission portion.

In an exemplary embodiment not forming part of the invention, at least part of the first end is in contact connection with at least part of the connection end. In an exemplary embodiment not forming part of the invention, at least part of the first end is connected to at least part of the connection end by one or more methods including resistance welding, friction welding, ultrasonic welding, arc welding, laser welding, electron beam welding, pressure diffusion welding, magnetic induction welding, screwing, clamping, splicing, and crimping. In an exemplary embodiment, the connection end comprises a connecting surface, and an area of a contact zone between the connecting surface and the first end accounts for equal to or more than 5% of an area of the connecting surface. In an exemplary embodiment, the connection end is sheet-shaped and comprises a first upper surface, a first lower surface and a first side surface, and the connecting surface is disposed on the first upper surface or the first lower surface, the first end is sheet-shaped and comprises a second upper surface, a second lower surface and a second side surface, and the first upper surface or the first lower surface is overlapped and then in contact connection with the second upper surface or the second lower surface.

In an exemplary embodiment, the connection end is column-shaped and comprises a side surface and an end surface, and the connecting surface is disposed on the end surface, the first end is sheet-shaped and comprises a second upper surface, a second lower surface and a second side surface, and the end surface is in contact connection with the second upper surface or the second lower surface.

In an exemplary embodiment, the transfer mechanism for power transmission further comprises a bolt, the second upper surface is provided with a through-hole penetrating to the second lower surface, the end surface is provided with a threaded hole, and the bolt is screwed with the threaded hole through the through-hole.

In an exemplary embodiment, a torque of the screwing between the bolt and the threaded hole is in a range of 0.1 N·m to 30 N·m.

In an exemplary embodiment, the connection end is barrel-shaped and comprises a first inner surface and a first outer surface, and the connecting surface is disposed on the first inner surface or the first outer surface, the first end is barrel-shaped and comprises a second inner surface and a second outer surface, the first inner surface or the first outer surface is overlapped and then in contact connection with the second outer surface or the second inner surface.

In an exemplary embodiment, a cross-section of the connection end or the first end is circular, elliptical, rectangular or polygonal. In an exemplary embodiment, the second end is tabular, bowl-shaped, U-shaped, V-shaped or barrel-shaped. In an exemplary embodiment not forming part of the invention, at least part of the conductor is in contact connection with at least part of the second end.

In an exemplary embodiment not forming part of the invention, at least part of the conductor is connected to at least part of the second end by one or more methods including resistance welding, friction welding, ultrasonic welding, arc welding, laser welding, electron beam welding, pressure diffusion welding, magnetic induction welding, screwing, clamping, splicing, and crimping.

In an exemplary embodiment, the connection end comprises a connecting surface, and at least part of the first end is in contact connection with at least part of the connecting surface; the second end comprises a wiring surface, and an area of a contact zone between the wiring surface and the conductor accounts for equal to or more than 5% of an area of the wiring surface.

In an exemplary embodiment, the transfer portion is formed by stamping, cutting, bending or machining a plate.

In an exemplary embodiment not forming part of the invention, the first end, the bent portion and the second end each have a thickness that differs by no more than 35%. In an exemplary embodiment, an included angle between two adjacent planes of the bent zone is 0° to 180°. In an exemplary embodiment not forming part of the invention, a bend of the bent zone is arc-shaped, and an inner radius of the bend is not less than one-third of a thickness of the transfer portion. In an exemplary embodiment, at least one reinforcing rib is disposed in a tangential direction of the bent zone, and the reinforcing rib is formed by inward depressing a material outside the bent zone. In an exemplary embodiment not forming part of the invention, the bent zone is twisted, and an included angle between a plane or a longitudinal center symmetry plane of the first end and a plane or a longitudinal center symmetry plane of the second end is 0° to 90°.

In an exemplary embodiment not forming part of the invention, a material of the transfer portion comprises one or more of nickel, cadmium, zirconium, chromium, cobalt, manganese, aluminum, tin, titanium, zinc, copper, silver, gold, phosphorus, tellurium, beryllium, and lead. In an exemplary embodiment, a material of the transfer portion comprises a tellurium-copper alloy, in which the content of tellurium is 0.1% to 5%. In an exemplary embodiment, a material of the transfer portion comprises a beryllium copper alloy, in which the content of beryllium is 0.05% to 5%. In an exemplary embodiment, a material of the transfer portion comprises a phosphor bronze alloy, in which the content of phosphorus is 0.01% to 1.5%. In an exemplary embodiment, a material of the transfer portion comprises a lead brass alloy, in which the content of lead is 0.1% to 5%.

In an exemplary embodiment not forming part of the invention, the power transmission portion, the conductor and the transfer portion are at least partially provided with coating. In an exemplary embodiment, at least part of the connecting surfaces is not provided with the coating. In an exemplary embodiment, at least part of the connecting surface is provided with the coating as a first coating.

In an exemplary embodiment not forming part of the invention, a plane on the first end at least in contact with the connecting surface is not provided with the coating. In an exemplary embodiment, a plane on the first end at least in contact with the connecting surface is provided with the coating as a second coating.

In an exemplary embodiment not forming part of the invention, at least part of the wiring surface is not provided with the coating.

In an exemplary embodiment not forming part of the invention, at least part of the wiring surface is provided with the coating as a third coating.

In an exemplary embodiment, the conductor is not provided with the coating. In an exemplary embodiment, at least part of the conductor is provided with the coating as a fourth coating.

In an exemplary embodiment, the first coating, the second coating, the third coating, and the fourth coating are made of different materials. In an exemplary embodiment, the first coating, the second coating, the third coating and the fourth coating have different thicknesses.

In an exemplary embodiment not forming part of the invention, a material of the coating comprises one or more of gold, silver, nickel, tin, zinc, a tin-lead alloy, a silver-antimony alloy, palladium, a palladium-nickel alloy, graphite silver, graphene silver, and a silver-gold-zirconium alloy.

In an exemplary embodiment not forming part of the invention, the coating is provided by electroplating, electroless plating, magnetron sputtering or vacuum plating.

In an exemplary embodiment not forming part of the invention, the coating comprises a bottom layer and a surface layer. In an exemplary embodiment, a material of the bottom layer comprises one or more of gold, silver, nickel, tin, a tin-lead alloy and zinc; and a material of the surface layer comprises one or more of gold, silver, nickel, tin, zinc, a tin-lead alloy, a silver-antimony alloy, palladium, a palladium-nickel alloy, graphite silver, graphene silver, and a silver-gold-zirconium alloy.

In an exemplary embodiment, a material of the conductor comprises aluminum. In an exemplary embodiment, a contact resistance between the power transmission portion and the transfer portion is less than 9 mΩ. In an exemplary embodiment, a contact resistance between the conductor and the transfer portion is less than 9 mΩ.

The present invention also provides a charging socket comprising the transfer mechanism for power transmission.

The present invention also provides a motor vehicle comprising the transfer mechanism for power transmission or the charging socket.

The present invention can bring about advantageous effects:
1. A transfer mechanism for power transmission provided by the present invention uses a transfer portion to connect a power transmission portion and a conductor of a cable, respectively, and provides a bent portion on the transfer portion, the power transmission portion can be connected to the cable in different axial directions, and the power transmission portion can be connected to the cable at an angle, in order to reduce a size of an electric device mechanism, and the electric device mechanism can be adapted to more operational environments.
2. The present invention also provides a charging socket using the transfer mechanism for power transmission of the present invention, so that the charging socket has a smaller volume, and a direction in which the cable is lead out may be arbitrarily set.

### BRIEF DESCRIPTION OF THE DRAWINGS

FIG. 1 is a structural schematic diagram illustrating an embodiment of a transfer mechanism for power transmission in the present invention.
FIG. 2 is a structural schematic diagram illustrating an embodiment of a power transmission portion in the present invention.
FIG. 3 is a structural schematic diagram illustrating another embodiment of a power transmission portion in the present invention.
FIG. 4 is a structural schematic diagram illustrating an embodiment of a transfer portion in the present invention.
FIG. 5 is a structural schematic diagram illustrating a Y direction in FIG. 4 in the present invention.
FIG. 6 is a structural schematic diagram illustrating an X direction in FIG. 4 in the present invention.
FIG. 7 is a structural schematic diagram illustrating another non-claimed embodiment of the power transmission portion in the present invention.
FIG. 8 is a structural schematic diagram illustrating a non-claimed embodiment of a combination of the power transmission portion and the transfer portion in the present invention.
FIG. 9 is a structural schematic diagram illustrating another non-claimed embodiment of the combination of the power transmission portion and the transfer portion in the present invention.
FIG. 10 is a structural schematic diagram illustrating a second end being bowl-shaped in the present invention.
FIG. 11 is a structural schematic diagram illustrating the second end being U-shaped in the present invention.
FIG. 12 is a structural schematic diagram illustrating the second end being barrel-shaped in the present invention.
FIG. 13 is a structural schematic diagram illustrating a reinforcing rib provided at the transfer portion in the present invention.
FIG. 14 is a structural schematic diagram illustrating a cross-section structure of a charging socket in the present invention.
1-power transmission portion, 11-plug-in end, 12-connection end, 13-connecting surface, 14-first upper surface, 15-first side surface, 16-first lower surface, 17-side surface, 18-end surface, 19-threaded hole; 2-transfer portion, 21-first end, 22-bent portion, 23-second end, 24-second upper surface, 25-second side surface, 26-second lower surface, 27-through-hole, 28-reinforcing rib; 3-cable, 31-conductor, 32-insulation layer; 4-bolt; 5-charging socket.

### DETAILED DESCRIPTION

The present invention is described in further detail below, so that those skilled in the art can implement the present invention with reference to the disclosure contained in the specification. In order to have a clearer understanding of the technical features, objective and effects of the present invention, the embodiments of the present invention are currently described with reference to the drawings, among which, terms "first", "second" or the like are only used for descriptive purposes, and cannot be construed to indicate or imply relative importance or implicitly specify the number of indicated technical features. Therefore, the features limited by "first", "second" or the like may expressly or implicitly include one or more of such features. In the description of the present invention, unless otherwise specified, "a plurality of" means two or more. In the description of the present invention, unless otherwise specified, the term "connection" should be understood in a broad sense, for example, the connection may be a fixed connection, a detachable connection, a direct connection, or an indirect connection through an intermediate medium. Those skilled in the art can understand specific meanings of the terms in the present patent according to a specific situation.

### Example 1

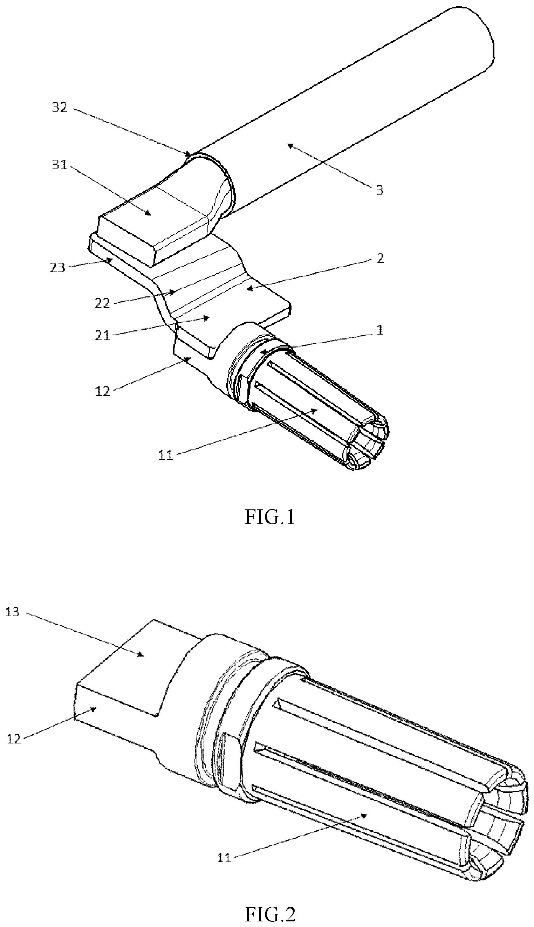

The present invention provides a transfer mechanism for power transmission, as illustrated in FIG. 1, comprising: a power transmission portion 1, a transfer portion 2 and a cable 3, in which the power transmission portion 1 comprises a plug-in end 11 and a connection end 12 which are connected in sequence, the cable 3 comprises an internal conductor 31 and an insulation layer 32 wrapping the conductor 31, the transfer portion 2 comprises a first end 21, a bent portion 22 and a second end 23 which are connected in sequence, the first end 21 is electrically connected to the connection end 12, the second end 23 is electrically connected to the conductor 31 on one end of the cable 3, and the bent portion 22 comprises at least one bent zone.

In the present invention, the transfer portion 2 is used to connect the power transmission portion 1 and the conductor 31 of the cable 3, respectively, and the bent portion 22 is disposed on the transfer portion 2, the power transmission portion 1 can be connected to the cable 3 in different axial directions, and the power transmission portion 1 can be connected to the cable 3 at an angle, in order to reduce a size of an electric device mechanism, and the electric device mechanism can be adapted to more operational environments.

In addition, the present invention provides the transfer portion 2, where an extended structure for connecting the cable 3 may not be provided on the power transmission portion 1, the machining difficulty of shape complexity of the power transmission portion 1 is also reduced while the material used in the power transmission portion 1 is saved. The power transmission portion 1 can be mass-produced in a simple process, and the production efficiency of the power transmission portion 1 is improved when machining hours are reduced.

In one embodiment, at least part of the first end 21 is in contact connection with at least part of the connection end 12. In order to realize the electrical connection between the power transmission portion 1 and the transfer portion 2, the connection end 12 of the power transmission portion 1 needs to be electrically connected to the first end 21 of the transfer portion 2, thus at least part of structure of the first end 21 is in contact connection with at least part of structure of the connection end 12 to achieve the purpose of electrical connection between the power transmission portion 1 and the transfer portion 2.

In one embodiment, at least part of the first end 21 is connected to at least part of the connection end 12 by one or more methods including resistance welding, friction welding, ultrasonic welding, arc welding, laser welding, electron beam welding, pressure welding, diffusion welding, magnetic induction welding, screwing, clamping, splicing, and crimping.

The resistance welding refers to a method of welding by generating heat from a contact resistance by a high current passing through a contact point between an electrode and a workpiece. The friction welding refers to a method of welding by using heat generated by friction of a contact surface of a workpiece as a heat source, so that the workpiece is subjected to plastic deformation under pressure. The ultrasonic welding refers to rubbing surfaces of two objects against each other to form a fusion between molecular layers under pressure, by transmitting high-frequency vibration waves to surfaces of two objects to be welded. The arc welding refers to converting electrical energy into thermal energy and mechanical energy required for welding by using an arc as a heat source and using a physical phenomenon of air discharge to achieve the purpose of bonding metals. The main methods are SMAW, SAW, and GMAW. The laser welding refers to an efficient and precise welding method that uses a high-energy-density laser beam as a heat source. The electron beam welding refers to a welding method of bombarding a welding surface placed in vacuum or non-vacuum by using accelerated and focused electron beams to melt a workpiece to be welded. The pressure welding refers to a welding method of applying pressure to a weldment so that a joint surface is in close contact to produce a plastic deformation. The diffusion welding refers to a solid-state welding method in which a workpiece is pressurized at high temperature without visible deformation and relative movement. The magnetic induction welding refers to that two workpieces to be welded are subjected to an instantaneous high-speed collision under the action of a strong pulsed magnetic field, so that atoms of two materials on the material surface are met at an inter-atomic distance under the action of high pressure waves, in order to form a stable metallurgical bond on an interface, a solid-state cold welding, which can weld conductive metals with similar or dissimilar properties together. The screwing refers to a detachable connection in which a connected piece is integrated with a threaded piece (or a threaded part of the connected piece). Common threaded joints include: a bolt 4, a stud, a screw and a set screw, mostly standard parts. The clamping refers to providing a claw or a groove on the connection end 12 or the connecting surface 13, respectively, and assembling, by the claw and groove, to connect them together. The clamping has advantages of quick connection and detachability. The splicing refers to providing a groove and a protrusion on the connection end 12 or the connecting surface 13, respectively, and assembling, by mortising or splicing, the groove and protrusion with each other to connect them together. The splicing has advantages of stable connection and detachability. The crimping refers to a production process in which the connection end 12 and the connecting surface 13 are assembled, and then stamped together by using a crimping machine. The crimping has an advantage of mass production. A large number of stable quality products can be quickly produced by using an automatic crimping machine.

In the connection methods, an appropriate connection method or a combination of connection methods can be selected according to actual operational environments and an actual state of the connection end 12 and the first end 21, so that the connection end 12 and the first end 21 are stably connected together to achieve an effective electrical connection.

In one embodiment, the connection end 12 comprises the connecting surface 13, and an area of a contact zone between the connecting surface 13 and the first end 21 accounts for equal to or more than 5% of an area of the connecting surface 13. In order to guarantee a good electrical connection between the power transmission portion 1 and the transfer portion 2, the contact area between the connecting surface 13 and the first end 21 is a key characteristic. The larger the contact area, the lower the voltage drop between the connecting surface 13 and the first end 21, the greater the pull-out force. In order to verify a ratio of the area of the contact zone between the connecting surface 13 and the first end 21 to the area of the connecting surface 13 and a relationship between the voltage drop between the connecting surface 13 and the first end 21 and the pull-out force, the inventors selected ten sets of the same power transmission portion 1 and transfer portion 2, and provided the same connecting surface 13 on the power transmission portion 1, and then adopted the same ultrasonic welding method, but selected the ratio of the area of the contact zone between the connecting surface 13 and the first end 21 to the area of the connecting surface 13, and then tested the voltage drop between the connecting surface 13 and the first end 21 by current conduction, and tested the pull-out force between the connecting surface 13 and the first end 21. The results are recorded in Table 1.

A method of testing a voltage drop refers to placing the connection end 12 and the first end 21 on a voltage drop detection table, testing voltage values A and B of the connecting surface 13 and the first end 21 themselves, respectively, and then testing a voltage value C of the connecting surface 13 to the first end 21, and then calculating a value of C-(A+B) as a voltage drop value of a connection point between the connecting surface 13 and the first terminal 21. In this embodiment, a voltage drop value greater than 4 mV is unqualified.

A method for testing a pull-out force refers to using a pull-out force tester to fix the connection end 12 and the first end 21 welded on fixtures of the pull-out force tester on both ends, respectively, and then starting up the pull-out force tester so that the fixtures on both ends move in two opposite directions at a uniform speed, and recording the pull-out force when the first end 21 is detached from the connection end 12. In this embodiment, a pull-out force less than 1600 N is unqualified.

**Table 1: Effects of the ratio of the area of the contact zone between the connecting surface 13 and the first end 21 to the area of the connecting surface 13 on the voltage drop and pull-out force**

| the ratio of the area of the contact zone between the connecting surface 13 and the first end 21 to the area of the connecting surface 13 (%) | | | | | | | | | |
|---|---|---|---|---|---|---|---|---|---|
| 1 | 3 | 5 | 10 | 15 | 20 | 40 | 60 | 80 | 100 |

| the voltage drop between the connecting surface 13 and the first end 21 (mV) | | | | | | | | | |
|---|---|---|---|---|---|---|---|---|---|
| 4.82 | 4.36 | 3.85 | 3.58 | 3.16 | 2.84 | 2.58 | 2.17 | 1.77 | 1.35 |

| the pull-out force between the connection end 12 and the first end 21 (N) | | | | | | | | | |
|---|---|---|---|---|---|---|---|---|---|
| 1508 | 1587 | 1623 | 1694 | 1763 | 1827 | 1886 | 1935 | 1994 | 2062 |

It can be seen from the Table 1 that when the area of the contact zone between the connecting surface 13 and the first end 21 accounts for less than 5% of the area of the connecting surface 13, the voltage drop between the connecting surface 13 and the first end 21 is greater than 4 mV, and the pull-out force between the connecting surface 13 and the first end 21 is less than 1600 N, both of which are unqualified; and when the area of the contact zone between the connecting surface 13 and the first end 21 accounts for equal to or more than 5% of the area of the connecting surface 13, the voltage drop between the connecting surface 13 and the first end 21 and the pull-out force are better than qualified values, and the greater the ratio, the better the electrical and mechanical performance of the connecting surface 13 and the first end 21. Therefore, the inventors set that the area of the contact zone between the connecting surface 13 and the first end 21 accounts for equal to or more than 5% of the area of the connecting surface 13.

In one embodiment, as illustrated in FIGS. 2-6, the connection end 12 is sheet-shaped, the connection end 12 comprises a first upper surface 14, a first lower surface 16 and a first side surface 15, and the connecting surface 13 is arranged on the first upper surface 14 or the first lower surface 16, the first end 21 is sheet-shaped and comprises a second upper surface 24, a second lower surface 26 and a second side surface 25, and the first upper surface 14 or the first lower surface 16 is overlapped and then in contact with the second upper surface 24 or the second lower surface 26. Both the connection end 12 and the first end 21 are sheet-shaped, are easy to machine, and are also easy to overlap and connect, which is beneficial to the manufacture of equipment fixtures and welding molds, and facilitates automatic production, improves production efficiency, and reduces production costs.

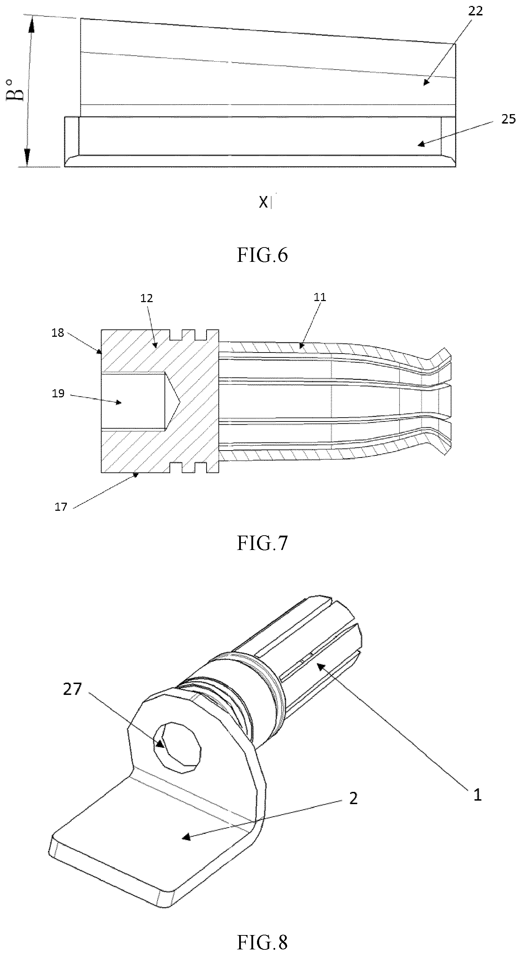

In one embodiment, as illustrated in FIGS. 7-9, the connection end 12 is column-shaped and comprises a side surface 17 and an end surface 18, the connecting surface 13 is disposed on the end surface 18, and the first end 21 is sheet-shaped and comprises a second upper surface 24, a second lower surface 26 and a second side surface 25, and the end surface 18 is in contact connection with the second upper surface 24 or the second lower surface 26. The end of the power transmission portion 1 is not machined into a sheet-like structure, but directly machined into the end surface 18, which can reduce the machining steps, reduce the machining time, and can shorten the length of the power transmission portion 1, simplify the size of the transfer mechanism for power transmission. In addition, the machining material of the power transmission portion 1 can be saved, and the cost of the power transmission portion 1 can be reduced. The end surface 18 of the connection end 12 and the first end 21 can be connected together by welding, screwing, clamping or splicing.

In one embodiment, as illustrated in FIGS. 7-9, the transfer mechanism for power transmission further comprises a bolt 4, the second upper surface 24 is provided with a through-hole 27 penetrating to the second lower surface 26, and the end surface 18 is provided with a threaded hole 19, and the bolt 4 is screwed with the threaded hole 19 through the through-hole 27. The power transmission portion 1 and the transfer portion 2 can be quickly connected together by means of threaded connection, and can be detachable, and can be easily disassembled and replaced in subsequent maintenance and repairs.

In one embodiment, a torque of the screwing between the bolt 4 and the threaded hole 19 is in a range of 0.1 N·m to 30 N·m.

In order to verify the range of the torque of the screwing between the bolt 4 and the threaded hole 19 and the effects on the electrical connection and mechanical connection performance of the power transmission portion 1 and the transfer portion 2, the inventors selected the same power transmission portion 1, transfer portion 2, bolt 4 and the threaded hole 19, tightened them together with different torques, tested the contact resistance between the bolt 4 and the threaded hole 19 and the connection between the bolt 4 and the threaded hole 19 after the vibration test, respectively. The test results are shown in Table 2.

A method of testing the contact resistance between the bolt 4 and the threaded hole 19 refers to using a micro-resistance meter, placing one end such as a measuring end of the micro-resistance meter on the power transmission portion 1, and placing the other end on the transfer portion 2, measuring in the same position each time, then reading a contact resistance reading on the micro-resistance meter. In this embodiment, a contact resistance greater than 1 mΩ is unqualified.

A vibration test refers to placing a connected sample on a vibration test table, after 300 vibration cycles, each cycle requiring vibration in six directions at frequency of 100 Hz, at acceleration in one direction of 40 m/s2, then observing whether the bolt 4 is loose from the threaded hole 19. In this embodiment, the looseness of the bolt 4 from the threaded hole 19 is unqualified.

**Table 2: Effects of different torques of the bolt 4 and the threaded hole 19 on the electrical connection and mechanical connection performance of the power transmission portion 1 and the transfer portion 2**

| the torque of the bolt 4 and the threaded hole 19 (N·m) | | | | | | | | | | | | | |
|---|---|---|---|---|---|---|---|---|---|---|---|---|---|
| 0.01 | 0.05 | 0.1 | 0.5 | 1 | 3 | 5 | 10 | 15 | 20 | 25 | 30 | 32 | 35 |

| the contact resistance between the power transmission portion 1 and the transfer portion 2 (mΩ) | | | | | | | | | | | | | |
|---|---|---|---|---|---|---|---|---|---|---|---|---|---|
| 1.16 | 1.05 | 0.96 | 0.94 | 0.91 | 0.88 | 0.86 | 0.83 | 0.81 | 0.79 | 0.74 | 0.71 | 0.71 | 0.7 1 |

| the connection between the power transmission portion 1 and the transfer portion 2 | | | | | | | | | | | | | |
|---|---|---|---|---|---|---|---|---|---|---|---|---|---|
| loose | loose | not loose | not loose | not loose | not loose | not loose | not loose | not loose | not loose | not loose | not loose | not loose | not loose |

It can be seen from the Table 2 that when the torque value of the screwing between the bolt 4 and the threaded hole 19 is less than 0.1 N·m, the contact resistance value between the power transmission portion 1 and the transfer portion 2 is unqualified, and the power transmission portion 1 is loose from the transfer portion 2 after the vibration test, therefore, the inventors set a minimum value of range of the torque of the screwing between the bolt 4 and the threaded hole 19 to be 0.1 N·m. When the torque value of the screwing between the bolt 4 and the threaded hole 19 is more than 30N·m, the contact resistance between the power transmission portion 1 and the transfer portion 2 cannot be further reduced. Therefore, the inventors determined the torque of the screwing between the bolt 4 and the threaded hole 19 to be in a range of 0.1 N·m to 30 N·m.

In one embodiment, the connection end 12 is barrel-shaped and comprises a first inner surface and a first outer surface, the connecting surface 13 is arranged on the first inner surface or the first outer surface, and the first end 21 is barrel-shaped and comprises a second inner surface and a second outer surface, and the first inner surface or the first outer surface is overlapped and then in contact with the second outer surface or the second inner surface. Both the connection end 12 and the first end 21 are barrel-shaped, and can be overlapped together by socketing, and then connected in the above connection method. This overlapping socketing method achieves a large contact area between the connection end 12 and the first end 21, thus the contact resistance between the connection end 12 and the first end 21 can be effectively reduced and the electrical performance of the transfer mechanism for power transmission can be improved.

In one embodiment, a cross-section of the connection end 12 or the first end 21 is circular, elliptical, rectangular or polygonal. The connection end 12 or the first end 21 has a barrel-shaped structure, the cross-section may be set in a plurality of shapes, and different cross-sectional shapes may be selected according to a specific operational environment of the connection end 12 or the first end 21 and an own machining technology thereof, so as to achieve the purpose of effectively electrically connecting the connection end 12 to the first end 21.

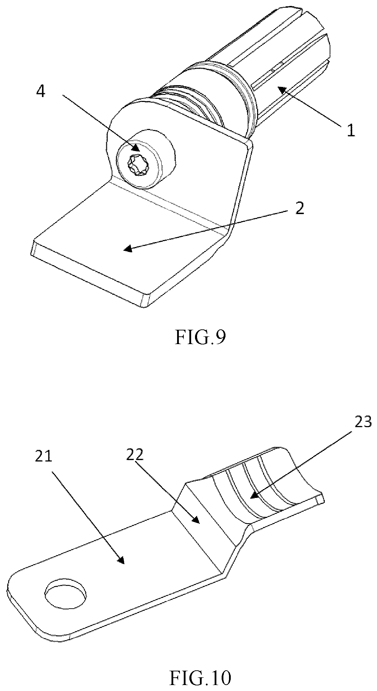

In one embodiment, as illustrated in FIGS. 10-12, the second end 23 is tabular, bowl-shaped, U-shaped, V-shaped or barrel-shaped. The second end 23 is in a position where the transfer portion 2 is connected to the conductor 31 of the cable 3, and the shape of the second end 23 may be selected according to the shape of the conductor 31 of the cable 3 and the specific operational environment. The shape such as the tabular shape and bowl-shape are generally used for welding with the conductor 31, the U-shape and V-shape are generally used for crimping with the conductor 31, and the barrel-shape can be used for crimping or welding with the conductor 31.

In one embodiment, at least part of the conductor 31 is in contact connection with at least part of the second end 23. In order to realize the electrical connection between the transfer portion 2 and the conductor 31 of the cable 3, the conductor 31 of the cable 3 needs to be electrically connected to the second end 23 of the transfer portion 2, and at least part of structure of the conductor 31 of the cable 3 is in contact connection with at least part of structure of the second end 23, so as to achieve the purpose of electrically connecting the transfer portion 2 to the conductor 31 of the cable 3.

In one embodiment, at least part of the conductor 31 is connected to at least part of the second end 23 by one or more methods including resistance welding, friction welding, ultrasonic welding, arc welding, laser welding, electron beam welding, pressure diffusion welding, magnetic induction welding, screwing, clamping, splicing, and crimping.

The specific connection methods have been described in detail in the description, and will not be described here anymore. In the above connection methods, an appropriate connection method or a combination of the connection methods can be selected, according to the actual operational environment, and the actual state of the conductor 31 of the cable 3 and the second end 23, and at least part of the conductor 31 of the cable 3 is stably connected to at least part of the second end 23 to realize an effective electrical connection.

In one embodiment, the connection end 12 comprises the connecting surface 13, at least part of the first end 21 is at least partially in contact connection with the connecting surface 13; the second end 23 comprises a wiring surface, and the area of the contact zone between the wiring surface and the conductor 31 accounts for equal to or more than 5% of the area of the wiring surface. In order to guarantee a good electrical connection between the transfer portion 2 and the conductor 31 of the cable 3, the contact area between the wiring surface and the conductor 31 is a key characteristic. The larger the contact area, the lower the voltage drop between the wiring surface and the conductor 31, the greater the pull-out force. In order to verify a ratio of the area of the contact zone between the wiring surface and the conductor 31 to the area of the wiring surface, and a relationship between the voltage drop between the wiring surface and the conductor 31 and the pull-out force, the inventors selected ten sets of the same transfer portion 2 and cable 3, and provided the same wiring surface on the second end 23, then adopted the same ultrasonic welding method, but selected a ratio of the area of the different contact zone between the wiring surface and the conductor 31 to the area of the wiring surface, and then tested the voltage drop between the wiring surface and the conductor 31 by current conduction, and tested the pull-out force between the wiring surface and the conductor 31. The results are recorded in Table 3.

A method of testing a voltage drop refers to placing the transfer portion 2 and the cable 3 on a voltage drop detection table, testing voltage values A and B of the wiring surface and the conductor 31 themselves, respectively, then testing a voltage value C of the wiring surface to the conductor 31, and then calculating a value of C-(A+B) as a voltage drop value of a connection point between the wiring surface and the conductor 31. In this embodiment, a voltage drop value greater than 4mV is unqualified.

A method of testing a pull-out force refers to using a pull-out force tester to fix the wiring surface and the conductor 31 welded on fixtures of the pull-out force tester on both ends, respectively, and then starting up the pull-out force tester so that the fixtures on both ends move in two opposite directions at a uniform speed, and recording the pull-out force when the conductor 31 is detached from the wiring surface. In this embodiment, a pull-out force less than 1600 N is unqualified.

**Table 3: Effects of the ratio of the area of the contact zone between the wiring surface and the conductor 31 to the area of the wiring surface on the voltage drop and the pull-out force between the wiring surface and the conductor 31**

| the ratio of the area of the contact zone between the wiring surface and the conductor 31 to the area of the wiring surface (%) | | | | | | | | | |
|---|---|---|---|---|---|---|---|---|---|
| 1 | 3 | 5 | 10 | 15 | 20 | 40 | 60 | 80 | 100 |

| the voltage drop between the wiring surface and the conductor 31 (mV) | | | | | | | | | |
|---|---|---|---|---|---|---|---|---|---|
| 4.93 | 4.27 | 3.92 | 3.66 | 3.24 | 2.73 | 2.62 | 2.21 | 1.69 | 1.43 |

| the pull-out force between the wiring surface and the conductor 31 (N) | | | | | | | | | |
|---|---|---|---|---|---|---|---|---|---|
| 1442 | 1578 | 1625 | 1683 | 1777 | 1835 | 1879 | 1933 | 1991 | 2054 |

It can be seen from the Table 3 that when the ratio of the area of the contact zone between the wiring surface and the conductor 31 accounts for less than 5% of the area of the wiring surface, the voltage drop between the wiring surface and the conductor 31 is greater than 4 mV, and the pull-out force between the wiring surface and the conductor 31 are less than 1600 N, both of which are unqualified; and when the area of the contact zone between the wiring surface and the conductor 31 accounts for equal to or more than 5% of the area of the wiring surface, the voltage drop and the pull-out force between the wiring surface and the conductor 31 are better than qualified values, and the greater the ratio, the better the electrical performance and mechanical performance of the wiring surface and the conductor 31. Therefore, the inventors set that the contact area between the wiring surface and the conductor 31 accounted for equal to or more than 5% of the area of the wiring surface.

In one embodiment, the transfer portion 2 is formed by stamping, cutting, bending or machining a plate. Plate machining process is a simple and mature process in the current metal machining technology, and plate is also one of the materials easily obtained. If the shape of the transfer portion 2 is not complicated, the waste generated in the plate machining process is much less than that generated in machining processes such as turning, milling, or the like, and is one of the production processes with high material utilization. The formed transfer portion 2 can be quickly produced in mass by using the mature plate stamping process and stamping dies. In addition, advanced processing techniques such as laser cutting and waterjet cutting can also be adopted to first blank the plate, and then the bending process can be adopted for forming, or machining the plate in the machined form can also reduce the production costs and improve the production efficiency of the transfer portion 2.

In one embodiment, the first end 21, the bent portion 22 and the second end 23 each have a thickness that differs by no more than 35%. For the transfer portion 2 to be formed of a plate, it is optimal that the plate has a consistent thickness, and the material is common, and when stamping or cutting and bending are adopted, the machining parameters can also be stable, however, due to various shapes of the connection end 12 or the conductor 31, the transfer mechanism for power transmission is also involved in various spaces and use environments. In some cases, the first end 21, the bent portion 22 and the second end 23 of different widths need to be used. In order to ensure the consistent conduction current of the transfer portion 2, the cross-sectional area of the transfer portion 2 at each position cannot differ too much, thus the first end 21, the bent portion 22 and the second end 23 having different thicknesses need to be used.

In order to verify the percentage of difference in thickness among the first end 21, the bent portion 22, and the second end 23 and the effects of the voltage drop on the transfer portion 2 itself, the inventors selected a plurality of samples of the transfer portion 2 having the same length, width and shape as the bent portion 22, and having different thicknesses from the first end 21, the bent portion 22 and the second end 23, and tested the voltage drop on both ends of the transfer portion 2. The test results are recorded in Table 4. In this embodiment, a voltage drop value greater than 4 mV is unqualified.

It should be noted that a percentage of difference in thickness among the first end 21, the bent portion 22 and the second end 23 refers to a value of maximum thickness/minimum thickness among the first end 21, the bent portion 22 and the second end 23 x 100%.

A method of testing a voltage drop refers to using a sample of the transfer portion 2 of which a thickness is the same as a minimum thickness of a sample piece, and other size and shape are the same, testing a voltage value D on both ends on a voltage drop detection table, and then using a sample of the transfer portion 2 having a different thickness from that in this embodiment, testing a voltage value E on both ends at the same position, and then calculating values of E-D as a voltage drop value of the transfer portion 2.

**Table 4: Effects of the percentage of difference in thickness on the voltage drop of the transfer portion 2**

| the percentage of difference in thickness of the first end 21, the bent portion 22 and the second end 23 (%) | | | | | | | | | | | |
|---|---|---|---|---|---|---|---|---|---|---|---|
| 5 | 10 | 15 | 25 | 35 | 40 | 50 | 60 | 70 | 80 | 90 | 100 |

| the voltage drop of the transfer portion 2 (mV) | | | | | | | | | | | |
|---|---|---|---|---|---|---|---|---|---|---|---|
| 2.64 | 3.05 | 3.37 | 3.61 | 3.95 | 4.11 | 4.53 | 5.04 | 5.67 | 6.13 | 6.58 | 7.21 |

It can be seen from the Table 4 that when the percentage of difference in thickness among the first end 21, the bent portion 22 and the second end 23 is greater than 35%, the voltage drop value of the transfer portion 2 does not meet the requirements of the qualified value due to significant differences in cross-sectional areas of the portions, when the first end 21, the bent portion 22 and the second end 23 each have a thickness that differs by no more than 35%, the voltage drop value of the transfer portion 2 is qualified. Therefore, the inventors set that the first end 21, the bent portion 22 and the second end 23 each have a thickness that differs by no more than 35%.

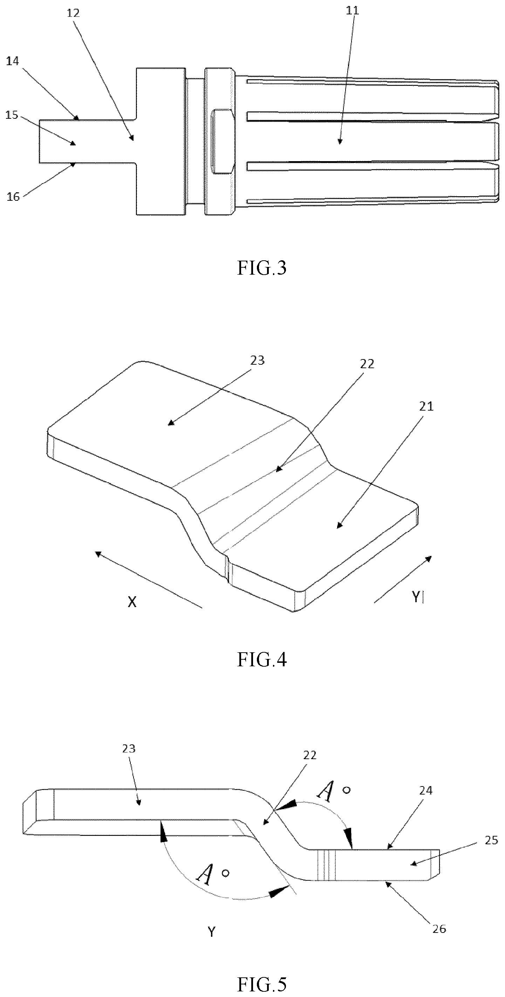

In one embodiment, an included angle between two adjacent planes in the bent zone is 0° to 180°. A bending angle falls within a range of 0° to 180° to readily meet the requirements of different wiring directions of the transfer portion 2. As illustrated in FIG. 5, the transfer portion 2 has two bent zones with a bending angle opposite A°, so that the first end 21 and the second end 23 of the transfer portion 2 form two substantially parallel planes. As illustrated in FIG. 8, the transfer portion 2 has a bent zone with a bending angle 90°, the outgoing direction of the cable 3 may be 90° to the axial direction of the power transmission portion 1, in order to meet the requirements for outgoing in different directions. In the other embodiments, the included angle between two adjacent planes in the bent zone may be changed due to a space limitation of the transfer mechanism for power transmission or other requirements of outgoing directions.

In one embodiment, a bend of the bent zone is arc-shaped, and an inner radius of the bent is not less than one-third of a thickness of the transfer portion 2. It should be noted that the bend of the bent zone is generally bent by stamping or using a bending machine. If the inner radius of the bent zone is too small or even zero, an external radius at the bend is also small, thereby resulting in excessive external stretching at the bend and concentrated stress at the bend. In the subsequent use process, the cable 3 may transmit the external shaking to the bent zone of the transfer portion 2. If the concentrated stress at the bend may cause the bend to fracture due to shaking, so that malfunctioning of the transfer mechanism for power transmission occurs, and in severe cases, a short circuit or a burning accident occurs. Therefore, in order to disperse the stress at the bend, the inner radius of the bend in the bent zone is greater than or equal to one-third of the thickness of the transfer portion 2.

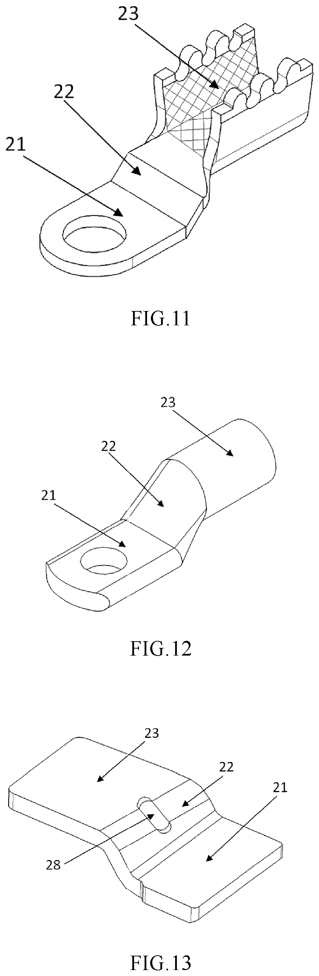

In one embodiment, at least one reinforcing rib 28 is disposed in a tangential direction of the bent zone, and the reinforcing rib 28 is formed by inward depressing a material outside the bent zone. As illustrated in FIG. 13, stamping is used in the bent zone, and at least one reinforcing rib 28 is machined, thus the strength of the bent zone can be strengthened, the maximum force that the transfer portion 2 can withstand in the bent zone can be increased, and the sheet-shaped transfer portion 2 can have a longer service life.

According to the invention, the bent zone is twisted, and an included angle between a plane or a longitudinal center symmetry plane of the first end 21 and a plane or a longitudinal center symmetry plane of the second end 23 is 0° to 90°. When the outgoing direction of the cable 3 is at a special angle for the transfer portion 2, the bent zone needs to be twisted when the angle formed by simply bending the bent zone is not satisfactory, so that the plane of the first end 21 is no longer parallel to but at an angle to the plane of the second end 23. When the first end 21 and the second end 23 are not planes, the longitudinal center symmetry plane of the first end 21 or the second end 23 may serve as a reference plane. At this time, the outgoing angle of the cable 3 is at an angle to an axial direction and a radial direction of the power transmission portion 1. As illustrated in FIG. 6, an included angle between the plane of the first end 21 and the plane of the second end 23 is B°.

In one embodiment, a material of the transfer portion 2 comprises one or more of nickel, cadmium, zirconium, chromium, cobalt, manganese, aluminum, tin, titanium, zinc, copper, silver, gold, phosphorus, tellurium, beryllium, and lead.

In order to demonstrate the effects of different materials of the transfer portion 2 on electrical conductivity of the transfer portion 2, the inventors produced samples of the transfer portion 2 by using different materials with the same size, and tested the electrical conductivity of the transfer portion 2, respectively. The results are shown in Table 5. In this embodiment, it is ideal that the electrical conductivity of the transfer portion 2 is greater than 99%.

**Table 5: Effects of different materials of the transfer portion 2 on the electrical conductivity of the transfer portion 2**

| different materials of the transfer portion 2 | | | | | | | | | | | | | | | |
|---|---|---|---|---|---|---|---|---|---|---|---|---|---|---|---|
| nick el | cad mi um | zirco niu m | chro miu m | cob alt | ma nga nes e | alum inu m | tin | tita niu m | zin c | cop per | silv er | gol d | tell uri um | ber ylli um | lea d |

| the electrical conductivity of the transfer portion 2 (%) | | | | | | | | | | | | | | | |
|---|---|---|---|---|---|---|---|---|---|---|---|---|---|---|---|
| 99.4 | 99. 3 | 99.2 | 99.2 | 99. 3 | 99. 3 | 99.6 | 99. 5 | 99. 5 | 99. 3 | 99. 7 | 99. 9 | 99. 7 | 99. 3 | 99. 4 | 99. 2 |

It can be seen from the Table 5 that the electrical conductivity of the transfer portion 2 made of the selected metal materials falls within a range of ideal values. In addition, phosphorus is a non-metallic material and cannot be directly used as a material of the transfer portion 2, but can be added to other metals to form an alloy, in order to improve the electrical conductivity and mechanical performance of the metal itself. Therefore, the inventors set that the material of the transfer portion 2 comprises one or more of nickel, cadmium, zirconium, chromium, cobalt, manganese, aluminum, tin, titanium, zinc, copper, silver, gold, phosphorus, tellurium, beryllium, and lead.

In one embodiment, a material of the transfer portion 2 comprises a tellurium-copper alloy, in which the content of tellurium is 0.1% to 5%. The transfer portion 2 has good electrical conductivity and processibility, ensures electrical performance, and can also improve machinability.

In order to verify the effects of the content of tellurium in the tellurium-copper alloy in the material of the transfer portion 2 on the electrical conductivity of the transfer portion 2, the inventors selected and tested ten transfer portions 2 having the same shape, and each of the transfer portions 2 has the same size, the transfer portion 2 is made of a tellurium-copper alloy, in which the content of tellurium is 0.05%, 0.1%, 0.2%, 0.5%, 0.8%, 1.2%, 2%, 3%, 5%, 6%, 7%, respectively. A current is conducted through the transfer portion 2, and the electrical conductivity of the transfer portion 2 is detected accordingly. The test results are shown in Table 6. In this embodiment, it is ideal that the electrical conductivity is greater than 99%.

**Table 6: Effects of the tellurium-copper alloy with different tellurium contents on the electrical conductivity of the transfer portion 2**

| the tellurium-copper alloy with different tellurium contents (%) | | | | | | | | | | |
|---|---|---|---|---|---|---|---|---|---|---|
| 0.05 | 0.1 | 0.2 | 0.5 | 0.8 | 1.2 | 2 | 3 | 5 | 6 | 7 |

| the electrical conductivity of the transfer portion 2 (%) | | | | | | | | | | |
|---|---|---|---|---|---|---|---|---|---|---|
| 98.4 | 99.2 | 99.6 | 99.7 | 99.8 | 99.7 | 99.5 | 99.5 | 99.1 | 98.9 | 98.6 |

It can be seen from the Table 6 that when the content of tellurium is less than 0.1% or greater than 5%, the electrical conductivity significantly decreases, and cannot meet the requirements of the ideal electrical conductivity; when the content of tellurium is greater than or equal to 0.2% and less than or equal to 1.2%, the optimal electrical conductivity is achieved; when the content of tellurium is greater than or equal to 0.1% and less than 0.2%, or greater than 1.2% and less than or equal to 5%, although the electrical conductivity meets the requirements of the ideal electrical conductivity, the trend is a gradual decline and the electrical conductivity also decreases. Therefore, the inventors chose a tellurium-copper alloy having a tellurium content of 0.1% to 5%. In the most ideal situation, a tellurium-copper alloy having a tellurium content of 0.2% to 1.2% is chosen.

In one embodiment, the material of the transfer portion 2 comprises a beryllium copper alloy, in which the content of beryllium is 0.05% to 5%. Preferably, the content of beryllium in the material of the transfer portion 2 is 0.1% to 3.5%.

The beryllium contained in the transfer portion 2 enables the transfer portion 2 to have high hardness, elastic limit, fatigue limit, and wear resistance, and also have good corrosion resistance, thermal conductivity and electrical conductivity, and does not generate any spark when impacted.

In order to test the effects of the content of beryllium on the electrical conductivity of the transfer portion 2, the inventors selected and tested ten transfer portions 2 having the same shape and width. Each of the transfer portions 2 contains beryllium, in which the proportion of beryllium content is 0.03%, 0.05%, 0.1%, 0.2%, 1%, 1.8%, 3%, 3.5%, 5%, 6%, respectively. The test results are shown in Table 7. In this embodiment, it is ideal that the electrical conductivity is greater than 99%.

**Table 7: Effects of different beryllium contents on electrical conductivity**

| the tellurium-copper alloy with different beryllium contents (%) | | | | | | | | | |
|---|---|---|---|---|---|---|---|---|---|
| 0.03 | 0.05 | 0.1 | 0.2 | 1 | 1.8 | 3 | 3.5 | 5 | 6 |

| the electrical conductivity of the transfer portion 2 (%) | | | | | | | | | |
|---|---|---|---|---|---|---|---|---|---|
| 98.9 | 99.2 | 99.5 | 99.6 | 99.8 | 99.6 | 99.3 | 99.2 | 99.1 | 98.7 |

It can be seen from the Table 7 that when the content of beryllium is less than 0.05% or greater than 5%, the electrical conductivity decreases significantly and cannot meet actual needs; when the content of beryllium is greater than or equal to 0.1% and less than or equal to 3.5%, the optimal electrical conductivity is achieved, thus the inventors chose the transfer portion 2, in which the content of beryllium is 0.05% to 5%. In the most ideal situation, the transfer portion 2, in which the content of beryllium is 0.1% to 3.5%, is selected.

In one embodiment, the material of the transfer portion 2 comprises a phosphor bronze alloy, in which the content of phosphorus is 0.01% to 1.5%. An advantage of phosphor bronze is that phosphor bronze has better corrosion resistance and wear resistance to guarantee good contact and elasticity of the transfer portion 2, and has excellent machining performance, thus the machining time of parts can be quickly shortened.

In order to test the effects of phosphorus content on the electrical conductivity of the transfer portion 2, the inventors selected and tested ten transfer portions 2 having the same shape and width. Each of the transfer portion 2 contains phosphorus, in which the proportion of phosphorus content is 0.001%, 0.005%, 0.01%, 0.05%, 0.1%, 0.5%, 1%, 1.5%, 2%, 2.5%, respectively. The test results are shown in Table 8. In this embodiment, it is ideal that the electrical conductivity is greater than 99%.

**Table 8: Effects of different phosphorus contents on electrical conductivity**

| the phosphor bronze alloy having different phosphorus contents (%) | | | | | | | | | |
|---|---|---|---|---|---|---|---|---|---|
| | | | | | | | | | |
| 0.001 | 0.005 | 0.01 | 0.05 | 0.1 | 0.5 | 1 | 1.5 | 2 | 2.5 |

| the electrical conductivity of the transfer portion 2 (%) | | | | | | | | | |
|---|---|---|---|---|---|---|---|---|---|
| 98.6 | 98.9 | 99.2 | 99.6 | 99.8 | 99.6 | 99.3 | 99.2 | 98.8 | 98.3 |

It can be seen from the Table 8 that when the content of phosphorus is less than 0.01% or greater than 1.5%, the electrical conductivity decreases significantly, and cannot meet actual needs; when the content of phosphorus is greater than or equal to 0.05% and less than or equal to 0.5%, the optimal electrical conductivity is achieved, thus the inventors chose the transfer portion 2, in which the content of phosphorus is 0.01% to 1.5%. In the most ideal situation, the transfer portion 2, in which the content of phosphorus is 0.05% to 0.5%, is selected.

In one embodiment, the material of the transfer portion 2 comprises a lead brass alloy, in which the content of lead is 0.1% to 5%. Advantages of the lead brass alloy are high strength, dense and uniform structure, good corrosion resistance, and excellent machining performance such as cutting and drilling.

In order to test the effects of lead content on the electrical conductivity of the transfer portion 2, the inventors selected and tested ten transfer portions 2 having the same shape and width. Each of the transfer portions 2 contains lead, in which the proportion of lead content is 0.05%, 0.1%, 0.5%, 1%, 2%, 3%, 4%, 5%, 6%, 7%, respectively. The test results are shown in Table 9. In this embodiment, it is ideal that the electrical conductivity is greater than 99%.

**Table 9: Effects of different lead contents on electrical conductivity**

| the lead brass alloy having different lead contents (%) | | | | | | | | | |
|---|---|---|---|---|---|---|---|---|---|
| 0.05 | 0.1 | 0.5 | 1 | 2 | 3 | 4 | 5 | 6 | 7 |

| the electrical conductivity of the transfer portion 2 (%) | | | | | | | | | |
|---|---|---|---|---|---|---|---|---|---|
| 98.6 | 99.2 | 99.3 | 99.6 | 99.8 | 99.6 | 99.3 | 99.1 | 98.8 | 98.3 |

It can be seen from the Table 9 that when the content of lead is less than 0.1% or greater than 5%, the electrical conductivity decreases significantly and cannot meet actual needs; when the content of lead is greater than or equal to 1% and less than or equal to 3%, the optimal electrical conductivity is achieved, thus the inventors chose the transfer portion 2, in which the content of lead is 0.1%-5%. In the most ideal situation, the transfer portion 2, in which the content of lead is 1% to 3%, is selected.

In one embodiment, the power transmission portion 1, the conductor 31 and the transfer portion 2 are at least partially provided with a coating to improve the corrosion resistance of the power transmission portion 1, the conductor 31 and the transfer portion 2 and improve the electrical conductivity, which can thus better prolong the service life of the transfer mechanism for power transmission.

In one embodiment, at least part of the connecting surface 13 is not provided with a coating. When the power transmission portion 1 is connected to the transfer portion 2, and when the connecting surface is connected by welding or pressing, the method of providing no coating may be adopted, so that the two connecting surfaces are in direct contact, which can thus reduce the contact resistance and reduce the voltage drop between the power transmission portion 1 and the transfer portion 2 and improve the electrical performance of the transfer mechanism for power transmission.

In one embodiment, at least part of the connecting surface 13 is provided with a coating as a first coating. When the transfer mechanism for power transmission is in a harsh environment, a coating is required to improve corrosion resistance; or the power transmission portion 1 and the transfer portion 2 are made of different materials, and a plated metal is required for transition. At this time, a coating needs to be provided on the connecting surface 13, and in order to distinguish such a coating from other coatings, the coating on the connecting surface 13 is the first coating.

In one embodiment, a plane of the first end 21 at least in contact with the connecting surface 13 is not provided with the coating. Similarly, when the power transmission portion 1 is connected to the transfer portion 2, and when the connecting surface is connected by welding or pressing, the method of providing no coating may be adopted, so that the two connecting surfaces are in direct contact, which can thus reduce the contact resistance and reduce the voltage drop between the power transmission portion 1 and the transfer portion 2 and improve the electrical performance of the transfer mechanism for power transmission.

In one embodiment, the first end 21 is provided with a coating on a plane at least in contact with the connecting surface 13, and the coating of the first end 21 on a plane at least in contact with the connecting surface 13 is the second coating. When the transfer mechanism for power transmission is in a harsh environment, a coating is required to improve corrosion resistance; or the power transmission portion 1 and the transfer portion 2 are made of different materials, and a plated metal is required for transition. At this time, a coating needs to be provided on the first end 21, and in order to distinguish such a coating from other coatings, the coating on the first end 21 is the second coating.

In one embodiment, at least part of the wiring surface is not provided with a coating. Similarly, when the conductor 31 is connected to the transfer portion 2, and when the wiring surface is connected by welding or pressing, the method of providing no coating can be adopted, so that the two surfaces are in direct contact, which can thus reduce the contact resistance and reduce the voltage drop between the conductor 31 and the transfer portion 2 and improve the electrical performance of the transfer mechanism for power transmission.

In one embodiment, at least part of the wiring surface is provided with a coating as the third coating. When the transfer mechanism for power transmission is in a harsh environment, a coating is required to improve corrosion resistance. At this time, a coating needs to be provided on the transfer portion 2. In order to distinguish such a coating from other coatings, the coating on the wiring surface is the third coating.

In one embodiment, no coating is provided on the conductor 31. Similarly, when the conductor 31 is connected to the transfer portion 2, and when the connecting surface is connected by welding or pressing, the method of providing no coating may be adopted, so that the two connecting surfaces are in direct contact, which can thus reduce the contact resistance and reduce the voltage drop between the conductor 31 and the transfer portion 2 and improve the electrical performance of the transfer mechanism for power transmission.

In one embodiment, at least part of the conductor 31 is provided with the coating as a fourth coating. When the transfer mechanism for power transmission is in a harsh environment, a coating is required to improve the corrosion resistance of the conductor 31. At this time, a coating needs to be provided on the conductor 31. In order to distinguish such a coating from other coatings, the coating on the conductor 31 is the fourth coating.

In one embodiment, the first coating, the second coating, the third coating and the fourth coating are made of different materials. That is, at least one of the first coating, the second coating, the third coating and the fourth coating is different in material from the others, i.e., the first coating material may be different from the second coating material, the third coating material and the fourth coating material; or the second coating material may be different from the first coating material, the third coating material and the fourth coating material; or the third coating material may be different from the first coating material, the second coating material and the fourth coating material; or the fourth coating material may be different from the first coating material, the second coating material and the third coating material.

Alternatively, two of the first coating, the second coating, the third coating and the fourth coating are the same in material, but different from the other two, i.e., the material of the first coating may be the same as that of the second coating, the material of the third coating may be the same as that of the fourth coating, however, the material of the first coating may be different from that of the third coating; or the material of the first coating may be the same as that of the third coating, and the material of the second coating may be the same as that of the fourth coating, however, the material of the first coating may be different from that of the second coating; or the material of the first coating may be the same as that of the fourth coating, and the material of the second coating may be the same as that of the third coating, however, the material of the first coating may be different from that of the second coating,

alternatively, three of the first coating, the second coating, the third coating and the fourth coating are different in material, i.e., the material of the first coating may be the same as that of the second coating, but different from the materials of the third coating and the fourth coating; the material of the first coating may be the same as that of the third coating, but different from the materials of the second coating and the fourth coating; the material of the first coating may be the same as that of the fourth coating, but different from the materials of the second coating and the third coating; the material of the second coating may be the same as that of the third coating, but different from the materials of the first coating and the fourth coating; the material of the second coating may be the same as that of the fourth coating, but different from the materials of the first coating and the third coating; and the material of the third coating may be the same as that of the fourth coating, but different from the materials of the first coating and the second coating.

In one embodiment, the thickness of the first coating, the thickness of the second coating, the thickness of the third coating are different from that of the fourth coating. That is, at least one of the first coating, the second coating, the third coating and the fourth coating has a thickness different from the others, i.e., the thickness of the first coating may be different from the thickness of the second coating, the thickness of the third coating and the thickness of the third coating; or the thickness of the second coating may be different from the thickness of the first coating, the thickness of the third coating and the thickness of the fourth coating; or the thickness of the third coating may be different from the thickness of the first coating, the thickness of the second coating and the thickness of the fourth coating; or the thickness of the fourth coating may be different from the thickness of the first coating, the thickness of the second coating and the thickness of the third coating.

Alternatively, two of the first coating, the second coating, the third coating and the fourth coating are the same in thickness, but different from the other two, i.e., the thickness of the first coating may be the same as the thickness of the second coating, the thickness of the third coating may be the same as the thickness of the fourth coating, however, the thickness of the first coating may be different from the thickness of the third coating; or the thickness of the first coating may be the same as the thickness of the third coating, the thickness of the second coating may be the same as the thickness of the fourth coating, however, the thickness of the first coating may be different from the thickness of the second coating; or the thickness of the first coating may be the same as the thickness of the fourth coating, the thickness of the second coating may be the same as the thickness of the third coating, however, the thickness of the first coating may be different from the thickness of the second coating,

alternatively, three of the first coating, the second coating, the third coating and the fourth coating are different in thickness, i.e., the thickness of the first coating may be the same as the thickness of the second coating, but different from the thickness of the third coating and the thickness of the fourth coating; the thickness of the first coating may be the same as the thickness of the third coating, but different from the thickness of the thickness of the second coating and the thickness of the fourth coating; the thickness of the first coating may be the same as the thickness of the fourth coating, but different from the thickness of the second coating and the thickness of the third coating; the thickness of the second coating may be the same as the thickness of the third coating, but different from the thickness of the first coating and the thickness of the fourth coating; the thickness of the second coating may be the same as the thickness of the fourth coating, but different from the thickness of the first coating and the thickness of the third coating; and the thickness of the third coating may be the same as the thickness of the fourth coating, but different from the thickness of the first coating and the thickness of the second coating.

In one embodiment, a material of the coating comprises one or more of gold, silver, nickel, tin, zinc, a tin-lead alloy, a silver-antimony alloy, palladium, a palladium-nickel alloy, graphite silver, graphene silver, and a silver-gold-zirconium alloy. In most cases, the power transmission portion 1 and the transfer portion 2 may be made of a copper material. As an active metal, copper oxidizes with oxygen and water in use, thus one or more inactive metals are required as a coating to prolong the service life of the power transmission portion 1 and the transfer portion 2. The conductivity and stability of the metals are better than those of copper or copper alloys, thus the power transmission portion 1 and the transfer portion 2 can obtain better electrical performance and longer service life.

In order to demonstrate the effects of different coating materials on the overall performance of the power transmission portion 1 and the transfer portion 2, the inventors used samples of the power transmission portion 1 and the transfer portion 2 having the same specification and materials but different coating materials and performed a series of corrosion-resistant time tests. The experimental results are shown in Table 10.

The corrosion-resistant time tests in the Table 10 are that samples of the power transmission portion 1 and the transfer portion 2 are placed in a salt-spraying test chamber, and salt is sprayed at each position of the samples of the power transmission portion 1 and the transfer portion 2, removed and cleaned every 20 hours to observe the surface corrosion, that is, one cycle, until a surface corrosion area of the samples of the power transmission portion 1 and the transfer portion 2 is greater than 10% of the total area, the test is stopped and the number of cycles at that time is recorded. In this embodiment, the number of cycles less than 80 is considered unqualified.

**Table 10: Effects of different coating materials on the corrosion resistance of the samples of the power transmission portion 1 and the transfer portion 2**

| different coating materials | | | | | | | | | | | |
|---|---|---|---|---|---|---|---|---|---|---|---|
| gol d | silv er | silver-antimo ny alloy | graphi te silver | graphe ne silver | silver-gold-zirconiu m alloy | tin | nic kel | palladiu m | palladiu m-nickel alloy | tin-lea d allo y | zin c |
| the number of corrosion-resistance test cycles | | | | | | | | | | | |
| 131 | 128 | 122 | 130 | 136 | 131 | 83 | 89 | 111 | 122 | 109 | 88 |

It can be seen from the Table 10 that when the coating material contains common metals such as tin, nickel and zinc, the experimental results are not as good as other selected metals. The experimental results of other selected metals significantly exceed the standard value, and the performance is stable. Therefore, the inventors selected that the coating material comprised one or more of gold, silver, nickel, tin, zinc, a tin-lead alloy, a silver-antimony alloy, palladium, a palladium-nickel alloy, graphite silver, graphene silver, and a silver-gold-zirconium alloy.

In one embodiment, the coating is provided by electroplating, electroless plating, magnetron sputtering or vacuum plating. The electroplating process is a process of plating a thin layer of other metals or alloys on a metal surface based on the principle of electrolysis. The electroless plating process is a process of metal deposition through a controllable oxidation-reduction reaction under the catalysis of metals. The magnetron sputtering process adopts an interaction between a magnetic field and an electric field such that electrons run spirally near a target surface, thereby increasing the probability that the electrons collide with argon gas to generate ions, and the resulting ions hit the target surface under the action of the electric field to sputter a target material. The vacuum plating process refers to depositing various metal and non-metal films on the surface of parts by distillation or sputtering under vacuum conditions.

In one embodiment, the coating comprises: a bottom layer and a surface layer. The coating adopts a multi-layer plating method. After the power transmission portion 1 and the transfer portion 2 are machined, there are still gaps and holes under a surface microscopic interface, these gaps and holes are a major cause of wear and corrosion of the power transmission portion 1 and the transfer portion 2 in use. In this embodiment, on the surface of the power transmission portion 1 and the transfer portion 2, a layer of the bottom layer is first plated to fill the gaps and holes on the surface, so that the surface of the power transmission portion 1 and the transfer portion 2 is smooth without holes and then is plated with a surface layer, thus is more firmly bonded and smoother without gaps or holes on the surface of the coating, therefore, the better wear-resistant, corrosion-resistant and electrical performance of the power transmission portion 1 and the transfer portion 2 are achieved, thereby greatly extending the service life of the power transmission portion 1 and the transfer portion 2.

In one embodiment, a material of the bottom layer comprises one or more of gold, silver, nickel, tin, a tin-lead alloy and zinc; a material of the surface layer comprises one or more of gold, silver, nickel, tin, zinc, a tin-lead alloy, a silver-antimony alloy, palladium, a palladium-nickel alloy, graphite silver, graphene silver and a silver-gold-zirconium alloy.

In another embodiment, a thickness of the bottom layer is 0.01 µm to 15 µm, preferably, the thickness of the bottom layer is 0.1 µm to 9µm.

In another embodiment, a thickness of the surface layer is 0.5 µm to 55 µm, preferably, the thickness of the surface layer is 1 µm to 35 µm.

In order to demonstrate the effects of change in thickness of the coating of the bottom layer on the overall performance of the power transmission portion 1 and the transfer portion 2, the inventors used samples of the power transmission portion 1 and the transfer portion 2 having the same specification and materials, with the nickel-plated bottom layer having different thicknesses, and the silver-plated surface layer having the same thickness, and performed a series of temperature rise tests and corrosion-resistant time tests. The experimental results are shown in Table 11.

The temperature rise tests are that the same current is conducted through the samples of the power transmission portion 1 and the transfer portion 2 after connected, and the temperature of the samples of the power transmission portion 1 and the transfer portion 2 is detected in the same position before power-on and after temperature stabilization in a closed environment temperature, and an absolute value is taken by difference. In this embodiment, a temperature rise greater than 50 K is considered unqualified.

The corrosion-resistant time tests are that the samples of the power transmission portion 1 and the transfer portion 2 are placed in a salt-spraying test chamber, and salt is sprayed at each position of the samples of the power transmission portion 1 and the transfer portion 2, removed and cleaned every 20 hours to observe the surface corrosion, that is, one cycle, until a surface corrosion area of the samples of the power transmission portion 1 and the transfer portion 2 is greater than 10% of the total area, the test is stopped and the number of cycles at that time is recorded. In this embodiment, the number of cycles less than 80 is considered unqualified.

**Table 11: Effects of different coating thicknesses of the bottom layer on the temperature rise and corrosion resistance of the power transmission portion 1 and the transfer portion 2**

| different nickel-plating thicknesses of the bottom layer (µm) | | | | | | | | | | | | | |
|---|---|---|---|---|---|---|---|---|---|---|---|---|---|
| 0.001 | 0.005 | | 0.01 | | 0.05 | 0.1 | 0.5 | | 1 | | 3 | | 5 |

| temperature rise of the power transmission portion 1 and the transfer portion 2 (k) | | | | | | | | | | | | | |
|---|---|---|---|---|---|---|---|---|---|---|---|---|---|
| 10.0 | 12.2 | | 14.9 | | 16.1 | 18.2 | 21.7 | | 24.4 | | 26.6 | | 28.6 |

| the number of corrosion-resistance test cycles | | | | | | | | | | | | | |
|---|---|---|---|---|---|---|---|---|---|---|---|---|---|
| 68 | 78 | | 84 | | 93 | 103 | 109 | | 113 | | 115 | | 120 |

| different nickel-plating thicknesses of the bottom layer (µm) | | | | | | | | | | | | | |
|---|---|---|---|---|---|---|---|---|---|---|---|---|---|
| 6 | | 9 | | 10 | | 11 | | 12 | | 13 | | 15 | |

| temperature rise of the power transmission portion 1 and the transfer portion 2 (k) | | | | | | | | | | | | | |
|---|---|---|---|---|---|---|---|---|---|---|---|---|---|
| 31.1 | | 35.7 | | 40.1 | | 43.5 | | 44.8 | | 56.3 | | 60.4 | |

| the number of corrosion-resistance test cycles | | | | | | | | | | | | | |
|---|---|---|---|---|---|---|---|---|---|---|---|---|---|
| 122 | | 128 | | 128 | | 130 | | 130 | | 129 | | 127 | |

It can be seen from the Table 11 that when the nickel-plating thickness of the bottom layer is less than 0.01 µm, although the temperature rise of the samples of the power transmission portion 1 and the transfer portion 2 is qualified, since the coating is too thin, the number of corrosion-resistance cycles of the samples of the power transmission portion 1 and the transfer portion 2 is less than 80, which does not meet the performance requirements of the samples of the power transmission portion 1 and the transfer portion 2, and has a great impact on the overall performance and service life of the transfer mechanism for power transmission, results in a sudden decrease in product lifespan and even leads to burning accidents, in severe cases. When the nickel-plating thickness of the bottom layer is greater than 12 µm, since the coating of the bottom layer is thick, the heat generated by the samples of the power transmission portion 1 and the transfer portion 2 cannot be dissipated, so that the temperature rise of the samples of the power transmission portion 1 and the transfer portion 2 is unqualified, and the thick coating tends to peel off from the surface of the samples of the power transmission portion 1 and the transfer portion 2 and results in a decrease in the number of corrosion-resistance cycles. Therefore, the inventors chose the coating thickness of the bottom layer to be 0.01 µm to 12 µm.

Preferably, the inventors found that when the coating thickness of the bottom layer was 0.1 µm to 9 µm, the samples of the power transmission portion 1 and the transfer portion 2 had better comprehensive effects of the temperature rise and corrosion resistance. Therefore, in order to further improve the safety, reliability and practicability of the product itself, preferably, the coating of the bottom layer has a thickness of 0.1 µm to 9 µm.

In order to demonstrate the effects of change in coating thickness of the surface layer on the overall performance of the power transmission portion 1 and the transfer portion 2, the inventors used the samples of the power transmission portion 1 and the transfer portion 2 having the same specification and materials, with the nickel-plated bottom layer having the same thickness and the silver-plated surface layer having different thicknesses, performed a series of temperature rise and corrosion-resistant time tests. The experimental method is the same as the above experimental method. The experimental results are shown in Table 12.

**Table 12: Effects of different coating thicknesses of the surface layer on the temperature rise and corrosion resistance of the power transmission portion 1 and the transfer portion 2**

| different silver-plating thicknesses of the surface layer (µm) | | | | | | | | | | | | | | |
|---|---|---|---|---|---|---|---|---|---|---|---|---|---|---|
| | 0.1 | 0.5 | 1 | | 1.5 | | 5 | | 10 | | 15 | | 20 | 25 |

| temperature rise of the power transmission portion 1 and the transfer portion 2 (k) | | | | | | | | | | | | | | |
|---|---|---|---|---|---|---|---|---|---|---|---|---|---|---|
| | 11.4 | 13.8 | 15.2 | | 17.5 | | 21.8 | | 23.7 | | 25.4 | | 28.6 | 31.5 |

| the number of corrosion-resistance test cycles | | | | | | | | | | | | | | |
|---|---|---|---|---|---|---|---|---|---|---|---|---|---|---|
| | 75 | 81 | 91 | | 93 | | 95 | | 97 | | 98 | | 102 | 105 |

| different silver-plating thicknesses of the surface layer (µm) | | | | | | | | | | | | | | |
|---|---|---|---|---|---|---|---|---|---|---|---|---|---|---|
| 30 | | 35 | | 40 | | 45 | | 50 | | 55 | | 60 | | 65 |

| temperature rise of the power transmission portion 1 and the transfer portion 2 (k) | | | | | | | | | | | | | | |
|---|---|---|---|---|---|---|---|---|---|---|---|---|---|---|
| 35.6 | | 39 | | 42.5 | | 45.4 | | 48.2 | | 52.5 | | 53.8 | | 69.3 |

| the number of corrosion-resistance test cycles | | | | | | | | | | | | | | |
|---|---|---|---|---|---|---|---|---|---|---|---|---|---|---|
| 111 | | 112 | | 116 | | 117 | | 112 | | 105 | | 99 | | 95 |

It can be seen from the Table 12 that when the silver-plating thickness of the surface layer is less than 0.5 µm, although the temperature rise of the samples of the power transmission portion 1 and the transfer portion 2 are qualified, since the coating is too thin, the number of corrosion-resistance cycles of the samples of the power transmission portion 1 and the transfer portion 2 is less than 80, which does not meet the performance requirements of the samples of the power transmission portion 1 and the transfer portion 2, and has a great impact on the overall performance and service life of the transfer mechanism for power transmission, results in a sudden reduction in product lifespan and even leads to burning accidents, in severe cases. When the silver-coating thickness of the surface layer is greater than 50 µm, since the coating of the surface layer is thick, the heat generated by the terminal cannot be dissipated, so that the temperature rise is unqualified, and the thick coating tends to peel off from the surface of the samples of the power transmission portion 1 and the transfer portion 2 and results in a decrease in the number of corrosion-resistance cycles. Moreover, since the plating metal of the surface layer is expensive, use of a thick coating does not improve performance and has no practical value. Therefore, the inventors chose the silver-coating thickness of the surface layer to be 0.1 µm to 50 µm.

Preferably, the inventors found that when the coating thickness of the surface layer was 1 µm to 35 µm, the samples of the power transmission portion 1 and the transfer portion 2 had better comprehensive effects of the temperature rise and corrosion resistance. Therefore, in order to further improve the safety, reliability and practicability of the product itself, the coating of the surface layer preferably has a thickness of 1 µm to 35 µm.

In one embodiment, a material of the conductor 31 comprises aluminum. In the field of electrical connections, copper wires are used for the conduction of currents. Copper has high conductivity and good ductility. However, as the price of copper increases day by day, the material cost of copper as a wire becomes increasingly high. For this reason, people begin to look for alternatives to metallic copper to reduce cost. Metallic aluminum has a content of about 7.73% in the earth's crust, after the refining technology is optimized, the price is reduced, and aluminum is lighter in weight than copper and has conductivity second only to copper. Aluminum can replace part of copper in the field of electrical connections. Therefore, it is a development trend to replace copper with aluminum in the field of automotive electrical connections.

However, due to a large electrode potential difference between copper and aluminum, after the transfer portion 2 made of copper material is directly connected to the conductor 31, electrochemical corrosion occurs between copper and aluminum, and aluminum is susceptible to corrosion, thus the resistance of the connecting surface 13 is increased, which is susceptible to serious consequences, such as functional failure, fire, in electrical connections. Therefore, a coating needs to be added between copper and aluminum, which can reduce the electrode potential difference between copper and aluminum, improve the electrical performance between copper and aluminum while greatly prolonging the service life of the transfer mechanism for power transmission.

In another embodiment, when the material of the conductor 31 comprises aluminum, a material of the transfer portion 2 also comprises aluminum. At this time, the conductor 31 can be connected to the transfer portion 2 for transition without a spacer metal, and a direct connection can be made by crimping or welding or clamping or splicing or screwing, however, a spacer metal is disposed between the transfer portion 2 and the power transmission portion 1 for transition to prevent electrochemical corrosion between copper and aluminum.

In one embodiment, a contact resistance between the power transmission portion 1 and the transfer portion 2 is less than 9 mΩ. Generally, a high current need to be conducted between the power transmission portion 1 and the transfer portion 2. If the contact resistance between the power transmission portion 1 and the transfer portion 2 is greater than 9 mΩ, a significant temperature rise occurs at the contact position. As time goes on, the temperature becomes increasingly high. Excessively high temperature between the power transmission portion 1 and the transfer portion 2 results in asynchronous mechanical deformation, internal stress between the power transmission portion 1 and the transfer portion 2 due to different materials and different thermal expansion rates between the power transmission portion 1 and the transfer portion 2, and in severe cases, the coating may peel off, and the protection function cannot be realized. The excessively high temperature of the power transmission portion 1 and the transfer portion 2 may be conducted to the insulation layer 32 of the cable 3 connected to the transfer portion 2, so that the insulation layer 32 is molten accordingly, which cannot play the role of insulation protection, may lead to short circuit of the line, damage to the connection structure, and even safety accidents such as burning in serious cases. Therefore, the inventors set the contact resistance between the power transmission portion 1 and the transfer portion 2 to be less than 9 mΩ.

In order to verify the effects of the contact resistance between the power transmission portion 1 and the transfer portion 2 on the temperature rise and conductivity of the transfer mechanism for power transmission, the inventors selected the samples of the power transmission portion 1 and the transfer portion 2 having the same shape, set different contact resistances, and tested conductivity and temperature rise.

The conductivity test refers to connecting the power transmission portion 1 to the transfer portion 2, then powering on the transfer mechanism for power transmission to detect conductivity of a connection accordingly. In this embodiment, it is ideal that the electrical conductivity is greater than 99%.

The temperature rise test refers to conducting the same current through the transfer mechanism for power transmission, and detecting the temperature of the samples of the power transmission portion 1 and the transfer portion 2 in the same position before power-on and after temperature stabilization in a closed environment, and taking an absolute value by difference. In this embodiment, a temperature rise greater than 50 K is considered unqualified.

**Table 13: Effects of different contact resistances between the power transmission portion 1 and the transfer portion 2 on conductivity and temperature rise**

| different contact resistances between the power transmission portion 1 and the transfer portion 2 (mΩ) | | | | | | | | |
|---|---|---|---|---|---|---|---|---|
| 10 | 9 | 8 | 6 | 4 | 3 | 2 | 1 | 0.5 |

| temperature rise of the power transmission portion 1 and the transfer portion 2 (k) | | | | | | | | |
|---|---|---|---|---|---|---|---|---|
| 55 | 48 | 41 | 35 | 29 | 23 | 18 | 14 | 7 |

| conductivity of the transfer mechanism for power transmission (%) | | | | | | | | |
|---|---|---|---|---|---|---|---|---|
| 98.8 | 99.3 | 99.5 | 99.6 | 99.7 | 99.7 | 99.8 | 99.9 | 99.9 |

It can be seen from the Table 13 that when the contact resistance of the samples of the power transmission portion 1 and the transfer portion 2 is greater than 9 mΩ, the temperature rise of the samples of the power transmission portion 1 and the transfer portion 2 exceeds 50 K, meanwhile, the conductivity of the transfer mechanism for power transmission is also less than 99%, which does not meet the standard requirements. Therefore, the inventors set the contact resistance between the power transmission portion 1 and the transfer portion 2 to be less than 9 mΩ.

In one embodiment, a contact resistance between the conductor 31 and the transfer portion 2 is less than 9 mΩ. Generally, a high current needs to be conducted between the conductor 31 and the transfer portion 2. If the contact resistance between the conductor 31 and the transfer portion 2 is greater than 9 mΩ, a significant temperature rise occurs at the contact position. As time goes on, the temperature becomes increasingly high. Excessively high temperature between the conductor 31 and the transfer portion 2 results in asynchronous mechanical deformation, internal stress between the conductor 31 and the transfer portion 2 due to different materials and different thermal expansion rates between the conductor 31 and the transfer portion 2, and in severe cases, the coating of the transfer portion 2 may peel off, and the protection function cannot be realized. The excessively high temperature of the conductor 31 and the transfer portion 2 may be conducted to the insulation layer 32 of the cable 3, so that the insulation layer 32 is molten accordingly, which cannot play the role of insulation protection, may lead to a short circuit, damage to the connection structure, and even safety accidents such as burning in severe cases. Therefore, the inventors set the contact resistance between the conductor 31 and the transfer portion 2 to be less than 9 mΩ.

In order to verify the effects of the contact resistance between the conductor 31 and the transfer portion 2 on the temperature rise and conductivity of the transfer mechanism for power transmission, the inventors selected the samples of the conductor 31 and the transfer portion 2 having the same shape, and set different contact resistances, and tested conductivity and temperature rise. The conductivity test refers to connecting the conductor 31 to the transfer portion 2, then powering on the transfer mechanism for power transmission to detect the conductivity of the connection accordingly. In this embodiment, it is ideal that the electrical conductivity is greater than 99%. The temperature rise test refers to conducting the same current through the transfer mechanism for power transmission, and detecting the temperature of the samples of the conductor 31 and the transfer portion 2 in the same position before power-on and after temperature stabilization in a closed environment, and taking an absolute value by difference. In this embodiment, a temperature rise greater than 50 K is considered unqualified.

**Table 14: Effects of different contact resistances between the conductor 31 and the transfer portion 2 on conductivity and temperature rise**

| different contact resistances between the conductor 31 and the transfer portion 2 (mΩ) | | | | | | | | |
|---|---|---|---|---|---|---|---|---|
| 10 | 9 | 8 | 6 | 4 | 3 | 2 | 1 | 0.5 |

| temperature rise of the conductors 31 and the transfer portion 2 (k) | | | | | | | | |
|---|---|---|---|---|---|---|---|---|
| 58 | 46 | 42 | 36 | 28 | 24 | 19 | 16 | 8 |

| conductivity of the transfer mechanism for power transmission (%) | | | | | | | | |
|---|---|---|---|---|---|---|---|---|
| 98.7 | 99.2 | 99.4 | 99.6 | 99.8 | 99.8 | 99.8 | 99.9 | 99.9 |

It can be seen from the Table 14 that when the contact resistance of the samples of the conductor 31 and the transfer portion 2 is greater than 9 mΩ, the temperature rise of the samples of the conductor 31 and the transfer portion 2 exceeds 50 K, meanwhile, the conductivity of the transfer mechanism for power transmission is also less than 99%, which does not meet the standard requirements. Therefore, the inventors set the contact resistance between the conductor 31 and the transfer portion 2 to be less than 9 mΩ.

### Example 2

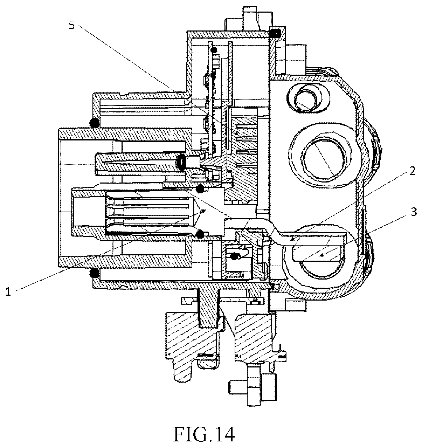

The present invention also provides a charging socket 5. As illustrated in FIG. 14, the charging socket 5 comprises the transfer mechanism for power transmission. An outgoing direction of the cable 3 can be set to any direction at a rear end of the charging socket 5 by using this charging socket 5, meanwhile, the situation in which a charging terminal of the charging socket 5 is not in the same axis as the cable 3 can also be realized, more design options are provided to a designer, different outgoing directions can be designed according to an installation environment of a charging cradle, and a size of the charging socket 5 can be reduced as much as possible and an installation space can be saved.

### Example 3

The present invention also provides a motor vehicle comprising the transfer mechanism for power transmission or the charging socket 5. The installation space of the charging socket 5 can be reduced to provide a convenient installation arrangement for other electrical appliances. Any outgoing direction can be set, and the shortest length of the cable 3 can be used to connect the battery system, save the material of the cable 3 and reduce the cost of the motor vehicle.

## Claims

1. A transfer mechanism for power transmission, comprising a power transmission portion(1), a transfer portion(2) and a cable(3), wherein the power transmission portion(1) comprises a plug-in end (11) and a connection end (12) which are connected in sequence; the cable(3) comprises an internal conductor(31) and an insulation layer(32) wrapping the conductor(31); the transfer portion(2) comprises a first end(21), a bent portion(22) and a second end(23) which are connected in sequence; the first end(21) is electrically connected to the connection end (12), the second end(23) is electrically connected to the conductor(31) on one end of the cable(3), and the bent portion(22) comprises at least one bent zone, **characterized in that**,
the bent zone is twisted, and an included angle between a plane or a longitudinal central symmetry plane of the first end (21) and a plane or a longitudinal central symmetry plane of the second end (23) is 0° to 90°, so that the outgoing angle of the cable (3) is at an angle to an axial direction and a radial direction of the power transmission portion (1).

2. The transfer mechanism for power transmission according to claim 1, wherein the connection end (12) comprises a connecting surface, and an area of a contact zone between the connecting surface and the first end (21) accounts for equal to or more than 5% of an area of the connecting surface.

3. The transfer mechanism for power transmission according to claim 2, wherein the connection end (12) is sheet-shaped and comprises a first upper surface(14), a first lower surface and(16) a first side surface, and the connecting surface is disposed on the first upper surface(14) or the first lower surface(16); the first end(21) is sheet-shaped and comprises a second upper surface(24), a second lower surface(26) and a second side surface(25), and the first upper surface(14) or the first lower surface(16) is overlapped and then in contact connection with the second upper surface(24) or the second lower surface(26).

4. The transfer mechanism for power transmission according to claim 2, wherein the connection end (12) is column-shaped and comprises a side surface(17) and an end surface(18), and the connecting surface is disposed on the end surface(18); the first end(21) is sheet-shaped and comprises a second upper surface(24), a second lower surface(26) and a second side surface(25), and the end surface(18) is in contact connection with the second upper surface(24) or the second lower surface(26).

5. The transfer mechanism for power transmission according to claim 4, further comprising a bolt (4); the second upper surface(24) is provided with a through-hole(27) penetrating to the second lower surface(26), the end surface(18) is provided with a threaded hole(19), and the bolt(4) is screwed with the threaded hole(19) through the through-hole(27).

6. The transfer mechanism for power transmission according to claim 5, wherein a torque of the screwing between the bolt(4) and the threaded hole(19) is in a range of 0.1 N·m to 30 N·m.

7. The transfer mechanism for power transmission according to claim 2, wherein the connection end (12) is barrel-shaped and comprises a first inner surface and a first outer surface, and the connecting surface is disposed on the first inner surface or the first outer surface; the first end(21) is barrel-shaped and comprises a second inner surface and a second outer surface, and the first inner surface or the first outer surface is overlapped and then in contact connection with the second outer surface or the second inner surface.

8. The transfer mechanism for power transmission according to claim 7, wherein a cross-section of the connection end (12) or the first end(21) is circular, elliptical, rectangular or polygonal.

9. The transfer mechanism for power transmission according to claim 1, wherein the second end (23) is tabular, bowl-shaped, U-shaped, V-shaped or barrel-shaped.

10. The transfer mechanism for power transmission according to claim 1, wherein
at least one reinforcing rib (28) is disposed in a tangential direction of the bent zone, and the reinforcing rib (28) is formed by inward depressing a material outside the bent zone.

11. The transfer mechanism for power transmission according to claim 1, wherein a material of the transfer portion (2) comprises tellurium-copper alloy, in which the content of tellurium is 0.1% to 5%; or
a material of the transfer portion (2) comprises beryllium copper alloy, in which the content of beryllium is 0.05% to 5%; or
a material of the transfer portion (2) comprises phosphor bronze alloy, in which the content of phosphorus is 0.01% to 1.5%; or
a material of the transfer portion(2) comprises lead brass alloy, in which the content of lead is 0.1% to 5%.

12. The transfer mechanism for power transmission according to claim 1, wherein
a contact resistance between the power transmission portion (1) and the transfer portion(2) is less than 9 mΩ; or
a contact resistance between the conductor (31) and the transfer portion(2) is less than 9 mΩ.

13. The transfer mechanism for power transmission according to claim 1, wherein the connection end (12) comprises a connecting surface, and at least part of the first end (21) is in contact connection with at least part of the connecting surface; the second end(23) comprises a wiring surface, and an area of a contact zone between the wiring surface and the conductor(31) accounts for equal to or more than 5% of an area of the wiring surface.

14. A charging socket (5), comprising the transfer mechanism for power transmission according to any one of claims 1 to 13.

15. A motor vehicle, comprising the transfer mechanism for power transmission according to any one of claims 1 to 13, or the charging socket (5) according to claim 14.

## Patentansprüche

1. Übertragungsmechanismus zur Stromübertragung, aufweisend einen Stromübertragungsabschnitt (1), einen Übertragungsabschnitt (2) und ein Kabel (3), wobei der Stromübertragungsabschnitt (1) ein Steckerende (11) und ein Anschlussende (12) aufweist, die in Reihe verbunden sind; das Kabel (3) einen Innenleiter (31) und eine den Leiter (31) umhüllende Isolierschicht (32) aufweist; der Übertragungsabschnitt (2) ein erstes Ende (21), einen gebogenen Abschnitt (22) und ein zweites Ende (23) aufweist, die in Reihe verbunden sind; das erste Ende (21) elektrisch mit dem Anschlussende (12) verbunden ist, das zweite Ende (23) elektrisch mit dem Leiter (31) an einem Ende des Kabels (3) verbunden ist und der gebogene Abschnitt (22) mindestens eine gebogene Zone aufweist,
**dadurch gekennzeichnet, dass**
die gebogene Zone verdreht ist und ein eingeschlossener Winkel zwischen einer Ebene oder einer Längsmittelachse des ersten Endes (21) und einer Ebene oder einer Längsmittelachse des zweiten Endes (23) 0° bis 90° beträgt, so dass der Austrittswinkel des Kabels (3) in einem Winkel zur axialen Richtung und zur radialen Richtung des Stromübertragungsabschnitts (1) steht.

2. Übertragungsmechanismus zur Stromübertragung nach Anspruch 1, bei dem das Anschlussende (12) eine Anschlussfläche aufweist und eine Fläche einer Kontaktzone zwischen der Anschlussfläche und dem ersten Ende (21) mindestens 5 % eines Bereichs der Anschlussfläche ausmacht.

3. Übertragungsmechanismus zur Stromübertragung nach Anspruch 2, bei dem das Anschlussende (12) blattförmig ist und eine erste Oberseite (14), eine erste Unterseite (16) und eine erste Seitenfläche aufweist und die Anschlussfläche auf der ersten Oberseite (14) oder der ersten Unterseite (16) angeordnet ist; das erste Ende (21) blattförmig ist und eine zweite Oberseite (24), eine zweite Unterseite (26) und eine zweite Seitenfläche (25) aufweist, und die erste Oberseite (14) oder die erste Unterseite (16) mit der zweiten Oberseite (24) oder der zweiten Unterseite (26) überlappt und dann mit diesen in einer Kontaktverbindung steht.

4. Übertragungsmechanismus zur Stromübertragung nach Anspruch 2, bei dem das Anschlussende (12) säulenförmig ist und eine Seitenfläche (17) und eine Endfläche (18) aufweist, und die Anschlussfläche auf der Endfläche (18) angeordnet ist; das erste Ende (21) blattförmig ist und eine zweite Oberseite (24), eine zweite Unterseite (26) und eine zweite Seitenfläche (25) aufweist, und die Endfläche (18) in einer Kontaktverbindung mit der zweiten Oberseite (24) oder der zweiten Unterseite (26) steht.

5. Übertragungsmechanismus zur Stromübertragung nach Anspruch 4, des Weiteren aufweisend einen Bolzen (4); wobei die zweite Oberseite (24) mit einem Durchgangsloch (27) versehen ist, das bis zur zweiten Unterseite (26) reicht, die Endfläche (18) mit einem Gewindeloch (19) versehen ist und der Bolzen (4) durch das Durchgangsloch (27) in das Gewindeloch (19) eingeschraubt ist.

6. Übertragungsmechanismus zur Stromübertragung nach Anspruch 5, bei dem ein Drehmoment der Verschraubung zwischen dem Bolzen (4) und der Gewindebohrung (19) in einem Bereich von 0,1 N·m bis 30 N·m liegt.

7. Übertragungsmechanismus zur Stromübertragung nach Anspruch 2, bei dem das Anschlussende (12) fassförmig ist und eine erste Innenfläche und eine erste Außenfläche aufweist, und die Anschlussfläche auf der ersten Innenfläche oder der ersten Außenfläche angeordnet ist; das erste Ende (21) fassförmig ist und eine zweite Innenfläche und eine zweite Außenfläche aufweist, und die erste Innenfläche oder die erste Außenfläche die zweite Außenfläche oder die zweite Innenfläche überlappt und dann mit diesen in einer Kontaktverbindung steht.

8. Übertragungsmechanismus zur Stromübertragung nach Anspruch 7, bei dem ein Querschnitt des Anschlussendes (12) oder des ersten Endes (21) kreisförmig, elliptisch, rechteckig oder polygonal ist.

9. Übertragungsmechanismus zur Stromübertragung nach Anspruch 1, bei dem das zweite Ende (23) tafelförmig, schalenförmig, U-förmig, V-förmig oder fassförmig ist.

10. Übertragungsmechanismus zur Stromübertragung nach Anspruch 1, bei dem mindestens eine Verstärkungsrippe (28) in einer tangentialen Richtung der gebogenen Zone angeordnet ist und die Verstärkungsrippe (28) durch Einbeulen eines Materials außerhalb der gebogenen Zone nach innen gebildet ist.

11. Übertragungsmechanismus zur Stromübertragung nach Anspruch 1, bei dem ein Material des Übertragungsabschnitts (2) eine Tellur-Kupfer-Legierung aufweist, in der der Tellurgehalt 0,1 % bis 5 % beträgt; oder
ein Material des Übertragungsabschnitts (2) eine Beryllium-Kupfer-Legierung aufweist, in der der Berylliumgehalt 0,05 % bis 5 % beträgt; oder
ein Material des Übertragungsabschnitts (2) eine Phosphorbronze-Legierung aufweist, in der der Phosphorgehalt 0,01 % bis 1,5 % beträgt; oder
ein Material des Übertragungsabschnitts (2) eine Bleimessinglegierung aufweist, in der der Bleigehalt 0,1 % bis 5 % beträgt.

12. Übertragungsmechanismus zur Stromübertragung nach Anspruch 1, bei dem
ein Kontaktwiderstand zwischen dem Stromübertragungsabschnitt (1) und dem Übertragungsabschnitt (2) weniger als 9 mΩ beträgt; oder
ein Kontaktwiderstand zwischen dem Leiter (31) und dem Übertragungsabschnitt (2) weniger als 9 mΩ beträgt.

13. Übertragungsmechanismus zur Stromübertragung nach Anspruch 1, bei dem das Anschlussende (12) eine Anschlussfläche aufweist und mindestens ein Teil des ersten Endes (21) in einer Kontaktverbindung mit mindestens einem Teil der Anschlussfläche steht; das zweite Ende (23) eine Verdrahtungsfläche aufweist und eine Fläche einer Kontaktzone zwischen der Verdrahtungsfläche und dem Leiter (31) mindestens 5 % einer Fläche der Verdrahtungsfläche ausmacht.

14. Ladebuchse (5), die den Übertragungsmechanismus zur Stromübertragung nach einem der Ansprüche 1 bis 13 aufweist.

15. Kraftfahrzeug, aufweisend den Übertragungsmechanismus zur Stromübertragung nach einem der Ansprüche 1 bis 13 oder die Ladebuchse (5) nach Anspruch 14.

## Revendications

1. Mécanisme de transfert pour transmission d'énergie comprenant
une section de transmission d'énergie (1), une section de transfert (2) et un câble (3), la section de transmission d'énergie (1) comportant une extrémité de connecteur (11) et une extrémité de connexion (12) qui sont reliées en série; le câble (3) comportant un conducteur interne (31) et une couche isolante (32) enveloppant le conducteur (31); la section de tranfert (2) comportant une première extrémité (21), une section courbée (22) et une deuxième extrémité (23) qui sont reliées en série; la première extrémité (21) est reliée électriquement à l'extrémité de connexion (12), la deuxième extrémité (23) est reliée électriquement au conducteur (31) à une extrémité du câble (3) et la section courbée (22) comporte au moins une zone courbée,
**caractérisé en ce que**
la zone courbée est torsadée et forme un angle compris entre un plan ou un axe longitudinal de la première extrémité (21) et un plan ou un axe longitudinal de la deuxième extrémité (23) est compris entre 0° et 90°, de sorte que l'angle de sortie du câble (3) forme un angle par rapport à la direction axiale et à la direction radiale de la partie de transmission de courant (1).

2. Mécanisme de transfert pour transmission d'énergie selon la revendication 1, dans lequel l'extrémité de connexion (12) présente une surface de connexion et une surface d'une zone de contact entre la surface de connexion et la première extrémité (21) représente au moins 5 % d'une zone de la surface de connexion.

3. Mécanisme de transfert pour transmission d'énergie selon la revendication 2, dans lequel l'extrémité de connexion (12) est en forme de feuille et présente une première face supérieure (14), une première face inférieure (16) et une première face latérale, et la surface de connexion est disposée sur la première face supérieure (14) ou la première face inférieure (16); la première extrémité (21) est en forme de feuille et présente une deuxième face supérieure (24), une deuxième face inférieure (26) et une deuxième face latérale (25), et la première face supérieure (14) ou la première face inférieure (16) chevauche la deuxième face supérieure (24) ou la deuxième face inférieure (26) et est alors en contact avec celles-ci.

4. Mécanisme de transfert pour transmission d'énergie selon la revendication 2, dans lequel l'extrémité de connexion (12) est en forme de colonne et présente une surface latérale (17) et une surface d'extrémité (18), et la surface de connexion est disposée sur la surface d'extrémité (18); la première extrémité (21) est en forme de lame et présente une deuxième face supérieure (24), une deuxième face inférieure (26) et une deuxième face latérale (25), et la face d'extrémité (18) est en contact avec la deuxième face supérieure (24) ou la deuxième face inférieure (26).

5. Mécanisme de transfert pour transmission d'énergie selon la revendication 4, comprenant en outre un boulon (4); la deuxième face supérieure (24) étant pourvue d'un trou traversant (27) qui s'étend jusqu'à la deuxième face inférieure (26), la face d'extrémité (18) étant pourvue d'un trou fileté (19) et le boulon (4) étant vissé à travers le trou traversant (27) dans le trou fileté (19).

6. Mécanisme de transfert pour transmission d'énergie selon la revendication 5, dans lequel le couple de serrage entre le boulon (4) et le trou fileté (19) est compris entre 0,1 N·m et 30 N·m.

7. Mécanisme de transfert pour transmission d'énergie selon la revendication 2, dans lequel l'extrémité de connexion (12) est en forme de tonneau et présente une première surface intérieure et une première surface extérieure, et la surface de connexion est disposée sur la première surface intérieure ou la première surface extérieure; la première extrémité (21) est en forme de tonneau et présente une deuxième surface intérieure et une deuxième surface extérieure, et la première surface intérieure ou la première surface extérieure recouvre la deuxième surface extérieure ou la deuxième surface intérieure, puis est en contact avec celles-ci.

8. Mécanisme de transfert pour transmission d'énergie selon la revendication 7, dans lequel une section transversale de l'extrémité de connexion (12) ou de la première extrémité (21) est circulaire, elliptique, rectangulaire ou polygonale.

9. Mécanisme de transfert pour transmission d'énergie selon la revendication 1, dans lequel la deuxième extrémité (23) est en forme de plaque, de coque, de U, de V ou de tonneau.

10. Mécanisme de transfert pour transmission d'énergie selon la revendication 1, dans lequel au moins une nervure de renfort (28) est disposée dans une direction tangentielle de la zone courbée et la nervure de renfort (28) est formée vers l'intérieur par emboutissage d'un matériau à l'extérieur de la zone courbée.

11. Mécanisme de transfert pour transmission d'énergie selon la revendication 1, dans lequel un matériau de la section de transfert (2) comprend un alliage de tellure et de cuivre dans lequel la teneur en tellure est comprise entre 0,1 % et 5 % ; ou
un matériau de la section de transfert (2) comprend un alliage de béryllium et de cuivre dans lequel la teneur en béryllium est comprise entre 0,05 % et 5 % ; ou
un matériau de la section de transfert (2) comprend un alliage de bronze phosphoreux dans lequel la teneur en phosphore est comprise entre 0,01 % et 1,5 % ; ou
un matériau de la section de transfert (2) comprend un alliage de laiton au plomb dans lequel la teneur en plomb est comprise entre 0,1 % et 5 %.

12. Mécanisme de transfert pour transmission d'énergie selon la revendication 1, dans lequel
la résistance de contact entre la section de transmission d'énergie (1) et la section de transfert (2) est inférieure à 9 mΩ ; ou
une résistance de contact entre le conducteur (31) et la section de transfert (2) est inférieure à 9 mΩ.

13. Mécanisme de transfert pour transmission d'énergie selon la revendication 1, dans lequel l'extrémité de connexion (12) comporte une surface de connexion et au moins une partie de la première extrémité (21) est en contact avec au moins une partie de la surface de connexion; la deuxième extrémité (23) comporte une surface de câblage et une surface d'une zone de contact entre la surface de câblage et le conducteur (31) représente au moins 5 % d'une surface de la surface de câblage.

14. Douille de charge (5) comprenant le mécanisme de transfert pour transmission d'énergie selon l'une des revendications 1 à 13.

15. Véhicule à moteur comprenant le mécanisme de transfert pour transmission d'énergie selon l'une des revendications 1 à 13 ou la douille de charge (5) selon la revendication 14.
